# EUROPÄISCHE PATENTSCHRIFT

(11) **EP 0 773 976 B1**
(45) Veröffentlichungstag und Bekanntmachung des Hinweises auf die Patenterteilung: **17.06.1998**
(21) Anmeldenummer: 95927678.3
(22) Anmeldetag: 20.07.1995
(51) Int. Cl.: C09B 29/36, C09B 29/033, B41M 5/38, C09B 31/14

(54) **AZOFARBSTOFFE MIT EINER KUPPLUNGSKOMPONENTE AUS DER AMINOTHIAZOLREIHE**
AZO DYES HAVING A COUPLING COMPONENT FROM THE AMINOTHIAZOLE SERIES
COLORANTS AZOIQUES PRESENTANT UN COMPOSANT DE COPULATION DE LA SERIE DES AMINOTHIAZOLES

(30) Priorität: 22.07.1994 DE 4426023
(43) Veröffentlichungstag der Anmeldung: 21.05.1997
(73) Patentinhaber: BASF AKTIENGESELLSCHAFT, 67056 Ludwigshafen (DE)
(72) Erfinder: ETZBACH, Karl-Heinz, D-67227 Frankenthal (DE); SENS, Rüdiger, D-68165 Mannheim (DE)
(86) Internationale Anmeldenummer: EP9502866
(87) Internationale Veröffentlichungsnummer: WO9603462

(56) Entgegenhaltungen:
- EP-A- 0 151 287
- EP-A- 0 362 637
- EP-A- 0 390 027
- EP-A- 0 400 451
- EP-A- 0 441 208

## Beschreibung

Die vorliegende Erfindung betrifft neue Azofarbstoffe der Formel I 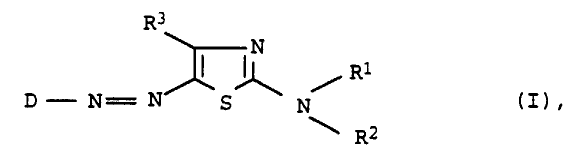 in der
- R¹ und R²: unabhängig voneinander jeweils für C₁-C₁₀-Alkyl, das gegebenenfalls durch Cyano, Hydroxy, Halogen, C₁-C₄-Alkanoyloxy, C₁-C₄-Alkoxycarbonyl, C₁-C₄-Alkoxycarbonyloxy oder Phenyl substituiert ist und durch 1 bis 4 Sauerstoffatome in Etherfunktion unterbrochen sein kann, C₅-C₇-Cycloalkyl, C₃-C₄-Alkenyl, gegebenenfalls durch C₁-C₄-Alkyl, C₁-C₄-Alkoxy oder Halogen substituiertes Phenyl oder R¹ und R² zusammen mit dem sie verbindenden Stickstoffatom einen 5- oder 6-gliedrigen gesättigten heterocyclischen Rest, der weitere Heteroatome enthalten kann,
- R³: für tert-Butyl oder tert-Pentyl und
- D: für einen Rest einer Diazokomponente aus der Anilinreihe oder der Reihe der aromatischen heterocyclischen Amine stehen,
ein Verfahren zum thermischen Transfer dieser Farbstoffe sowie ihre Verwendung zum Färben oder Bedrucken von synthetischen Materialien.

Aus der EP-A-441 208 sind bereits Azofarbstoffe bekannt, die als Kupplungskomponente ein 2-Aminothiazol aufweisen.

Aufgabe der vorliegenden Erfindung war es nun, neue Azofarbstoffe bereitzustellen, die beim Färben oder Bedrucken von textilen Materialen oder beim thermischen Farbstofftransfer vorteilhafte anwendungstechnische Eigenschaften aufweisen.

Demgemaß wurden die eingangs naher bezeichneten Azofarbstoffe der Formel I gefunden.

Hervorzuheben sind Azofarbstoffe der Formel I, in der D sich von einer Diazokomponente aus der Anilinreihe oder von einem Amin aus der Pyrrol-, Thiophen-, Pyrazol-, Thiazol-, Isothiazol-, Triazol-, Thiadiazol-, Benzthiophen-, Benzthiazol-, Benzisothiazol-, 5 Pyridothiophen-, Pyrimidothiophen- oder Thienothiophenreihe ableitet.

Geeignete Reste D gehorchen z.B. der Formel 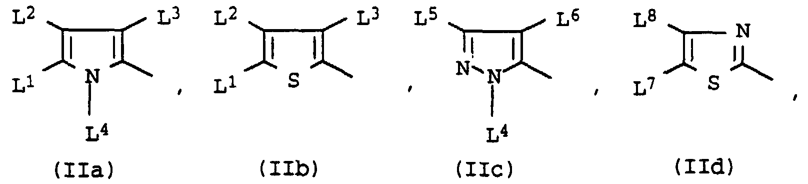 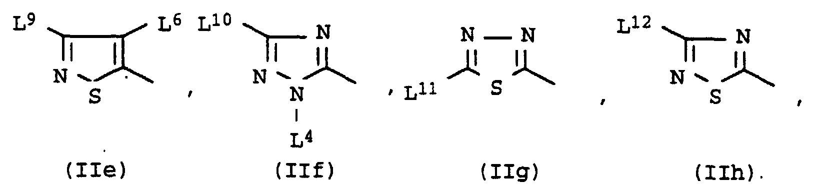 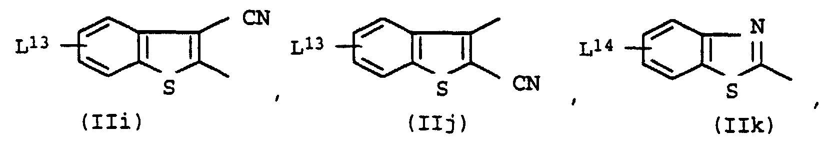 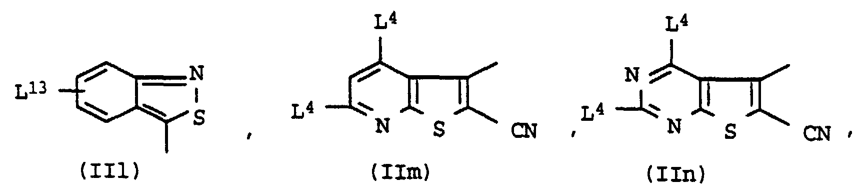 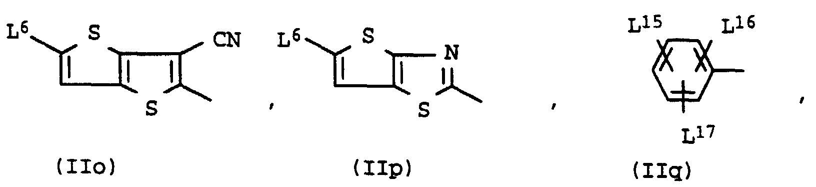 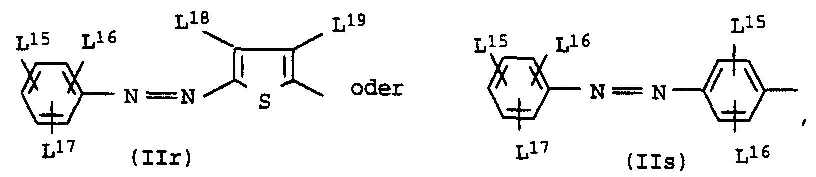 worin
- L¹: Nitro, Cyano, C₁-C₆-Alkanoyl, Benzoyl, C₁-C₆-Alkoxycarbonyl, C₁-C₈-Alkylsulfonyl, gegebenenfalls substituiertes Phenylsulfonyl oder einen Rest der Formel -CH=T, worin T die Bedeutung von Hydroxyimino, C₁-C₄-Alkoxyimino oder eines Restes einer CH-aciden Verbindung H₂T besitzt,
- L²: Wasserstoff, C₁-C₆-Alkyl, Halogen, Hydroxy, Mercapto, gegebenenfalls durch Phenyl oder C₁-C₄-Alkoxy substituiertes C₁-C₆-Alkoxy, gegebenenfalls substituiertes Phenoxy, gegebenenfalls durch Phenyl substituiertes C₁-C₈-Alkylthio, gegebenenfalls substituiertes Phenylthio, C₁-C₈-Alkylsulfonyl oder gegebenenfalls substituiertes Phenylsulfonyl,
- L³: Cyano, C₁-C₆-Alkoxycarbonyl oder Nitro,
- L⁴: Wasserstoff, C₁-C₆-Alkyl oder Phenyl,
- L⁵: C₁-C₆-Alkyl oder Phenyl,
- L⁶: Wasserstoff, Cyano, Nitro, C₁-C₆-Alkoxycarbonyl, C₁-C₆-Alkanoyl, Thiocyanato oder Halogen,
- L⁷: Nitro, Cyano, C₁-C₆-Alkanoyl, Benzoyl, C₁-C₆-Alkoxycarbonyl, C₁-C₈-Alkylsulfonyl, gegebenenfalls substituiertes Phenylsulfonyl oder einen Rest der Formel -CH=T, worin T die obengenannte Bedeutung besitzt,
- L⁸: Wasserstoff, C₁-C₆-Alkyl, gegebenenfalls substituiertes Phenyl, Cyano, Halogen, gegebenenfalls durch Phenyl oder C₁-C₄-Alkoxy substituiertes C₁-C₆-Alkoxy, gegebenenfalls durch Phenyl substituiertes C₁-C₈-Alkylthio, gegebenenfalls substituiertes Phenylthio, C₁-C₈-Alkylsulfonyl, gegebenenfalls substituiertes Phenylsulfonyl oder C₁-C₆-Alkoxycarbonyl,
- L⁹: Cyano, gegebenenfalls durch Phenyl oder C₁-C₄-Alkoxy substituiertes C₁-C₆-Alkyl, gegebenenfalls durch Phenyl substituiertes C₁-C₈-Alkoxy, gegebenenfalls durch Phenyl substituiertes C₁-C₈-Alkylthio, gegebenenfalls substituiertes Phenyl, Thienyl, C₁-C₄-Alkylthienyl, Pyridyl oder C₁-C₄-Alkylpyridyl oder zusammen mit L⁶ einen anellierten Benzorest,
- L¹⁰: Phenyl oder Pyridyl,
- L¹¹: Trifluormethyl, Nitro, C₁-C₆-Alkyl, Phenyl, gegebenenfalls durch Phenyl substituiertes C₁-C₈-Alkylthio oder C₁-C₆-Dialkylamino,
- L¹²: gegebenenfalls durch Acetyloxy substituiertes C₁-C₆-Alkyl, Phenyl, gegebenenfalls durch Phenyl substituiertes C₁-C₈-Alkylthio, 2-Cyanoethylthio oder 2-(C₁-C₆-Alkoxycarbonyl)ethylthio,
- L¹³: Wasserstoff, Nitro oder Halogen,
- L¹⁴: Wasserstoff, Cyano, C₁-C₆-Alkoxycarbonyl, Nitro oder Halogen,
- L¹⁵, L¹⁶ und L¹⁷: unabhängig voneinander jeweils Wasserstoff, C₁-C₆-Alkyl, C₁-C₆-Alkoxy, Halogen, Nitro, Cyano, gegebenenfalls durch Phenoxy substituiertes C₁-C₆-Alkoxycarbonyl, C₁-C₈-Alkylsulfonyl oder gegebenenfalls substituiertes Phenylsulfonyl, oder L¹⁵ und L¹⁶ zusammen einen Rest der Formel CO-NW-CO, worin W die Bedeutung von C₁-C₁₀-Alkyl besitzt, das durch 1 oder 2 Sauerstoffatome in Etherfunktion unterbrochen sein kann und gegebenenfalls durch Hydroxy substituiert ist,
- L¹⁸: Wasserstoff, Methyl oder Chlor und
- L¹⁹: Cyano oder C₁-C₆-Alkoxycarbonyl bedeuten.

Alle in den obengenannten Formeln auftretenden Alkyl- und Alkenylgruppen können sowohl geradkettig als auch verzweigt sein.

Wenn in den obengenannten Formeln substituierte Alkylgruppen auftreten, so weisen sie in der Regel 1 oder 2 Substituenten auf.

Wenn in den obengenannten Formeln substituierte Phenylgruppen auftreten, so können als Substituenten, sofern nicht anders vermerkt, z.B. C₁-C₈-Alkyl, C₁-C₈-Alkoxy, Halogen, dabei insbesondere Chlor oder Brom, oder Nitro in Betracht kommen.

Wenn in den obengenannten Formeln substituierte Phenyl-, Furanyl- oder Thienylgruppen auftreten, so weisen sie in der Regel 1 bis 3, vorzugsweise 1 oder 2, Substituenten auf.

Reste L², L⁴, L⁵, L⁸, L⁹, L¹¹, L¹², L¹⁵, L¹⁶, L¹⁷, R¹, R² und W sind z.B. Methyl, Ethyl, Propyl, Isopropyl, Butyl, Isobutyl, sec-Butyl, tert-Butyl, Pentyl, Isopentyl, Neopentyl, tert-Pentyl, Hexyl oder 2-Methylpentyl.

Reste R¹, R², R⁶ und W sind weiterhin z.B. Heptyl, Octyl, 2-Ethylhexyl, Isooctyl, Nonyl, Isononyl, Decyl oder Isodecyl (die Bezeichnungen Isooctyl, Isononyl und Isodecyl sind Trivialbezeichnungen und stammen von den nach der Oxosynthese erhaltenen Alkoholen - vgl. dazu Ullmann's Encyclopedia of Industrial Chemistry, 5^{th} Edition, Vol. A 1, Seiten 290 bis 293, sowie Vol. A 10, Seiten 284 und 285).

Reste R¹, R² und R⁶ sind weiterhin z.B. Cyclopentyl, Methylcyclopentyl, Dimethylcyclopentyl, Cyclohexyl, Methylcyclohexyl oder Cycloheptyl.

Reste L⁹, R¹, R² und W sind weiterhin z.B. 2-Methoxyethyl, 2-Ethoxyethyl, 2-Propoxyethyl, 2-Isopropoxyethyl, 2-Butoxyethyl, 2- oder 3-Methoxypropyl, 2- oder 3-Ethoxypropyl, 2- oder 3-Propoxypropyl, 2- oder 3-Butoxypropyl, 2- oder 4-Methoxybutyl, 2- oder 4-Ethoxybutyl, 2- oder 4-Propoxybutyl oder 2- oder 4-Butoxybutyl.

Reste R¹, R² und W sind weiterhin z.B. 3,6-Dioxaheptyl, 3,6-Dioxaoctyl, 4,8-Dioxanonyl, 3,7-Dioxaoctyl, 3,7-Dioxanonyl, 4,7-Dioxaoctyl, 4,7-Dioxanonyl oder 4,8-Dioxadecyl.

Reste R¹ und R² sind weiterhin z.B. 3,6,8-Trioxadecyl, 3,6,9-Trioxaundecyl, 3,6,9,12-Tetraoxatridecyl, 3,6,9,12-Tetraoxatetradecyl, 2-Cyanoethyl, 2- oder 3-Cyanopropyl, 2- oder 4-Cyanobutyl, 2-Hydroxyethyl, 2- oder 3-Hydroxypropyl, 2- oder 4-Hydroxybutyl, 2-Chlorethyl, 2- oder 3-Chlorpropyl, 2- oder 4-Chlorbutyl, 2-Acetyloxyethyl, 2- oder 3-Acetyloxypropyl, 2- oder 4-Acetyloxybutyl, 2-Propionyloxyethyl, 2- oder 3-Propionyloxypropyl, 2- oder 4-Propionyloxybutyl, 2-Methoxycarbonylethyl, 2-Ethoxycarbonylethyl, 2-Propoxycarbonylethyl, 2-Isopropoxycarbonylethyl, 2-Butoxycarbonylethyl, 2- oder 3-Methoxycarbonylpropyl, 2- oder 3-Ethoxycarbonylpropyl, 2- oder 3-Propoxycarbonylpropyl, 2- oder 3-Butoxycarbonylpropyl, 2- oder 4-Methoxycarbonylbutyl, 2- oder 4-Ethoxycarbonylbutyl, 2- oder 4-Propoxycarbonylbutyl, 2- oder 4-Butoxycarbonylbutyl, 2-Methoxycarbonyloxyethyl, 2-Ethoxycarbonyloxyethyl, 2-Propoxycarbonyloxyethyl, 2-Isopropoxycarbonyloxyethyl, 2-Butoxycarbonyloxyethyl, 2- oder 3-Methoxycarbonyloxypropyl, 2- oder 3-Ethoxycarbonyloxypropyl, 2- oder 3-Propoxycarbonyloxypropyl, 2- oder 3-Butoxycarbonyloxypropyl, 2- oder 4-Methoxycarbonyloxybutyl, 2- oder 4-Ethoxycarbonyloxybutyl, 2- oder 4-Propoxycarbonyloxybutyl, 2- oder 4-Butoxycarbonyloxybutyl, Prop-1-en-3-yl, But-2-en-4-yl oder 2-Methylprop-1-en-3-yl.

Reste L⁹, R¹ und R² sind weiterhin z.B. Benzyl oder 1- oder 2-Phenylethyl.

Reste L¹² sind weiterhin z.B. 2-Acetyloxyethyl, 2- oder 3-Acetyloxypropyl oder 2- oder 4-Acetyloxybutyl.

Reste L², L⁸, L⁹ und L¹¹ sind weiterhin z.B. Methylthio, Ethylthio, Propylthio, Isopropylthio, Butylthio, Isobutylthio, Pentylthio, Hexylthio, Heptylthio, Octylthio, 2-Ethylhexylthio, Benzylthio oder 1- oder 2-Phenylethylthio.

Reste L² und L⁸ sind weiterhin z.B. Phenylthio, 2-Methylphenylthio, 2-Methoxyphenylthio oder 2-Chlorphenylthio.

Reste L², L⁸, L⁹, L¹⁵, L¹⁶ und L¹⁷ sind weiterhin z.B. Methoxy, Ethoxy, Propoxy, Isopropoxy, Butoxy, Isobutoxy, sec-Butoxy, Pentyloxy, Isopentyloxy, Neopentyloxy, tert-Pentyloxy, Hexyloxy oder 2-Methylpentyloxy.

Reste L⁹ sind weiterhin z.B. Benzyloxy oder 1- oder 2-Phenylethoxy.

Reste L⁶ sind, wie weiterhin auch Reste L², L⁸, L¹³, L¹⁴, L¹⁵, L¹⁶ und L¹⁷, z.B. Fluor, Chlor oder Brom.

Reste L⁷ und L¹ sind, wie weiterhin auch Reste L², L⁸, L¹⁵, L¹⁶ und L¹⁷, z.B. Methylsulfonyl, Ethylsulfonyl, Propylsulfonyl, Isopropylsulfonyl, Butylsulfonyl, Isobutylsulfonyl, sec-Butylsulfonyl, Pentylsulfonyl, Isopentylsulfonyl, Neopentylsulfonyl, Hexylsulfonyl, Heptylsulfonyl, Octylsulfonyl, 2-Ethylhexylsulfonyl, Phenylsulfonyl, 2-Methylphenylsulfonyl, 2-Methoxyphenylsulfonyl oder 2-Chlorphenylsulfonyl.

Reste L³ sind, wie weiterhin auch Reste L¹, L⁶, L⁷, L⁸, L¹⁴, L¹⁵, L¹⁶, L¹⁷ und L¹⁹, z.B. Methoxycarbonyl, Ethoxycarbonyl, Propoxycarbonyl, Isopropoxycarbonyl, Butoxycarbonyl, Isobutoxycarbonyl, sec-Butoxycarbonyl, Pentyloxycarbonyl, Isopentyloxycarbonyl, Neopentyloxycarbonyl oder Hexyloxycarbonyl.

Reste L¹⁵, L¹⁶ und L¹⁷ sind weiterhin z.B. 2-Phenoxyethoxycarbonyl, 2- oder 3-Phenoxypropoxycarbonyl oder 2- oder 4-Phenoxybutoxycarbonyl.

Reste L² und L⁸ sind weiterhin z.B. 2-Methoxyethoxy, 2-Ethoxyethoxy, 2- oder 3-Methoxypropoxy, 2- oder 3-Ethoxypropoxy, 2- oder 4-Methoxybutoxy, 2- oder 4-Ethoxybutoxy, 5-Methoxypentyloxy, 5-Ethoxypentyloxy, 6-Methoxyhexyloxy, 6-Ethoxyhexyloxy, Benzyloxy oder 1- oder 2-Phenylethoxy.

Reste L¹¹ sind weiterhin z.B. Dimethylamino, Diethylamino, Dipropylamino, Diisopropylamino, Dibutylamino, Dipentylamino, Dihexylamino oder N-Methyl-N-ethylamino.

Reste L¹² sind weiterhin z.B. 2-Methoxycarbonylethylthio oder 2-Ethoxycarbonylethylthio.

Reste L⁸, L⁹, R¹ und R² sind weiterhin z.B. Phenyl, 2-, 3- oder 4-Methylphenyl, 2,4-Dimethylphenyl, 2-, 3- oder 4-Methoxyphenyl, 2-, 3- oder 4-Chlorphenyl oder 2-, 3- oder 4-Nitrophenyl.

Reste L⁹ sind weiterhin z.B. 2- oder 3-Methylthienyl oder 2-, 3- oder 4-Methylpyridyl.

Reste L¹, L⁶ und L⁷ sind weiterhin z.B. Formyl, Acetyl, Propionyl, Butyryl, Isobutyryl, Pentanoyl oder Hexanoyl.

Wenn L¹ oder L⁷ für den Rest -CH=T stehen, worin T sich von einer CH-aciden Verbindung H₂T ableitet, können als CH-acide Verbindungen H₂T z.B. Verbindungen der Formel 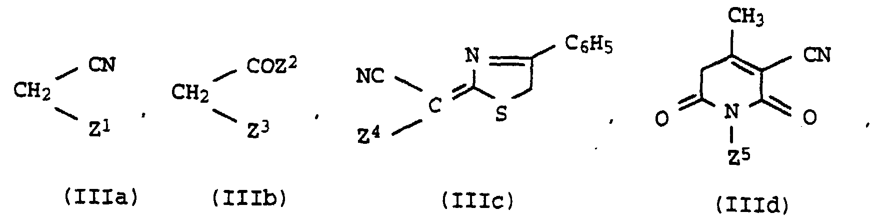 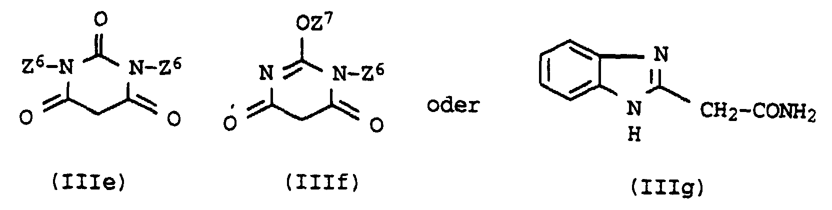 in Betracht kommen, wobei
- Z¹: Cyano, Nitro, C₁-C₄-Alkanoyl, gegebenenfalls substituiertes Benzoyl, C₁-C₄-Alkylsulfonyl, gegebenenfalls substituiertes Phenylsulfonyl, C₁-C₄-Alkoxycarbonyl, C₃-C₄-Alkenyloxycarbonyl, Phenoxycarbonyl, Carbamoyl, C₁-C₄-Mono- oder Dialkylcarbamoyl, gegebenenfalls substituiertes Phenylcarbamoyl, gegebenenfalls substituiertes Phenyl, Benzthiazol-2-yl, Benzimidazol-2-yl, 5-Phenyl-1,3,4-thiadiazol-2-yl oder 2-Hydroxychinoxalin-3-yl,
- Z²: C₁-C₄-Alkyl, C₁-C₄-Alkoxy oder C₃-C₄-Alkenyloxy,
- Z³: C₁-C₄-Alkoxycarbonyl, C₃-C₄-Alkenyloxycarbonyl, Phenylcarbamoyl oder Benzimidazol-2-yl,
- Z⁴: Cyano, C₁-C₄-Alkoxycarbonyl oder C₃-C₄-Alkenyloxycarbonyl,
- Z⁵: Wasserstoff oder C₁-C₆-Alkyl,
- Z⁶: Wasserstoff, C₁-C₄-Alkyl oder Phenyl und
- Z⁷: C₁-C₄-Alkyl bedeuten.

Dabei ist der Rest, der sich von Verbindungen der Formel IIIa, IIIb oder IIIc ableitet, worin Z¹ Cyano, C₁-C₄-Alkanoyl, C₁-C₄-Alkoxycarbonyl oder C₃-C₄-Alkenyloxycarbonyl, Z² C₁-C₄-Alkyl, C₁-C₄-Alkoxy oder C₃-C₄-Alkenyloxy, Z³ C₁-C₄-Alkoxycarbonyl oder C₃-C₄-Alkenyloxycarbonyl und Z⁴ Cyano bedeuten, hervorzuheben.

Besonders hervorzuheben ist dabei der Rest, der sich von Verbindungen der Formel IIIa, IIIb oder IIIc ableitet, worin Z¹ Cyano, C₁-C₄-Alkoxycarbonyl oder C₃-C₄-Alkenyloxycarbonyl, Z² C₁-C₄-Alkoxy oder C₂-C₄-Alkenyloxy, Z³ C₁-C₄-Alkoxycarbonyl oder C₃-C₄-Alkenyloxycarbonyl und Z⁴ Cyano bedeuten.

Wenn die Reste R¹ und R² zusammen mit dem sie verbindenden Stickstoffatom einen fünf- oder sechsgliedrigen gesättigten heterocyclischen Rest, der weitere Heteroatome enthalten kann, bedeuten, so kommen dafür z.B. Pyrrolidinyl, Piperidinyl, Morpholinyl, Thiomorpholinyl, Thiomorpholinyl-S,S-dioxid, Piperazinyl oder N-(C₁-C₄-Alkyl)piperazinyl, wie N-Methyl- oder N-Ethylpiperazinyl, in Betracht.

Bevorzugt sind Azofarbstoffe der Formel I, in der R¹ und R² unabhängig voneinander jeweils für C₁-C₈-Alkyl, das gegebenenfalls durch C₁-C₄-Alkoxy, C₁-C₄-Alkoxycarbonyl oder Phenyl substituiert ist, Cyclopentyl, Cyclohexyl oder Prop-1-en-3-yl stehen.

Weiterhin bevorzugt sind Azofarbstoffe der Formel I, in der D für einen Rest der Formel IIb, IId, IIe, IIh oder IIq steht.

Besonders bevorzugt sind Azofarbstoffe der Formel I, in der R¹ und R² unabhangig voneinander jeweils für C₁-C₆-Alkyl, das gegebenenfalls durch Phenyl substituiert ist, stehen.

Besonders bevorzugt sind weiterhin Azofarbstoffe der Formel I, in der R³ tert-Butyl bedeutet.

Weiterhin besonders bevorzugt sind Azofarbstoffe der Formel I, in der D für einen Rest der Formel IIb, IId, IIe, IIh oder IIq steht, worin
- L¹: Nitro, Cyano, Formyl oder einen Rest der der Formel -CH=T, worin T die Bedeutung eines Rests einer CH-aciden Verbindung H₂T besitzt,
- L²: C₁-C₆-Alkyl oder Halogen,
- L³: Cyano, C₁-C₆-Alkoxycarbonyl oder Nitro,
- L⁶: Cyano,
- L⁷: Nitro, Cyano, Formyl, C₁-C₆-Alkoxycarbonyl oder einen Rest der Formel -CH=T, worin T die obengenannte Bedeutung besitzt,
- L⁸: C₁-C₆-Alkyl, gegebenenfalls substituiertes Phenyl, Cyano, Halogen oder C₁-C₆-Alkoxycarbonyl,
- L⁹: gegebenenfalls durch Phenyl substituiertes C₁-C₆-Alkyl, gegebenenfalls durch Phenyl substituiertes C₁-C₆-Alkylthio oder gegebenenfalls substituiertes Phenyl,
- L¹²: gegebenenfalls durch Phenyl substituiertes C₁-C₈-Alkylthio und
- L¹⁵, L¹⁶, L¹⁷: unabhängig voneinander jeweils Wasserstoff, C₁-C₆-Alkyl, C₁-C₆-Alkoxy, Nitro, Cyano oder gegebenenfalls durch Phenoxy substituiertes C₁-C₆-Alkoxycarbonyl oder L¹⁵ und L¹⁶ zusammen einen Rest der Formel CO-NW-CO, worin W die obengenannte Bedeutung besitzt, bedeuten.

Die neuen Azofarbstoffe der Formel I können nach an sich bekannten Methoden erhalten werden. Beispielsweise kann man eine Diazokomponente der Formel IV

D-NH₂ (IV),

in der D die obengenannte Bedeutung besitzt, auf an sich bekannte Weise diazotieren und mit einem Aminothiazol der Formel V 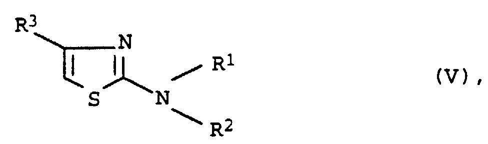 in der R¹, R² und R³ jeweils die obengenannte Bedeutung besitzt, kuppeln.

Ein weiterer Gegenstand der vorliegenden Erfindung ist ein Verfahren zur Übertragung von Farbstoffen von einem Träger auf ein mit Kunststoff beschichtetes Papier durch Diffusion oder Sublimation mit Hilfe einer Energiequelle, das dadurch gekennzeichnet ist, daß man einen Träger verwendet, auf dem sich ein oder mehrere Azofarbstoffe der Formel I befinden.

Zur Herstellung der für das erfindungsgemäße Verfahren benötigten Farbstoffträger werden die Azofarbstoffe der Formel I in einem geeigneten organischen Lösungsmittel oder in Mischungen von Lösungsmitteln mit einem oder mehreren Bindemitteln, gegebenenfalls unter Zugabe von Hilfsmitteln, zu einer Druckfarbe verarbeitet. Diese enthält die Farbstoffe vorzugsweise in molekular-dispers gelöster Form. Die Druckfarbe kann mittels einer Rakel auf den inerten Träger aufgetragen und die Färbung an der Luft getrocknet werden. Geeignete organische Lösungsmittel für die Azofarbstoffe der Formel I sind z.B. solche, in denen die Löslichkeit der Farbstoffe bei einer Temperatur von 20°C größer als 1 Gew.-%, vorzugsweise größer als 5 Gew.-% ist.

Beispielhaft seien Ethanol, Propanol, Isobutanol, Tetrahydrofuran, Methylenchlorid, Methylethylketon, Cyclopentanon, Cyclohexanon, Toluol, Chlorbenzol oder deren Mischungen genannt.

Als Bindemittel kommen alle Resins oder Polymermaterialien in Betracht, die in organischen Lösungsmitteln löslich sind und die die Azofarbstoffe an den inerten Träger abriebfest zu binden vermögen. Dabei werden solche Bindemittel bevorzugt, die die Farbstoffe nach Trocknung der Druckfarbe an der Luft in Form eines klaren, transparenten Films aufnehmen, ohne daß dabei eine sichtbare Auskristallisation der Farbstoffe auftritt.

Solche Bindemittel sind beispielsweise in der US-A-5 132 438 oder in den entsprechenden dort zitierten Patentanmeldungen genannt. Darüber hinaus sind gesättigte lineare Polyester zu nennen.

Bevorzugte Bindemittel sind Ethylcellulose, Ethylhydroxyethylcellulose, Polyvinylbutyral, Polyvinylacetat, Cellulosepropionat oder gesättigte lineare Polyester.

Das Gewichtsverhältnis Bindemittel: Azofarbstoff beträgt im allgemeinen 1:2 bis 4:1.

Als Hilfsmittel kommen z.B. Trennmittel in Betracht, wie sie in der US-A-5 132 438 oder den entsprechenden dort zitierten Patentanmeldungen genannt sind. Darüber hinaus sind besonders organische Additive zu nennen, welche das Auskristallisieren der Transferfarbstoffe bei Lagerung oder beim Erhitzen des Farbbandes verhindern, z.B. Cholesterin oder Vanillin.

Geeignete inerte Träger sind z.B. in der US-A-5 132 438 oder in den entsprechenden dort zitierten Patentanmeldungen beschrieben. Die Dicke des Farbstoff-Trägers beträgt im allgemeinen 3 bis 30 µm, vorzugsweise 5 bis 10 µm.

Als Farbstoffnehmerschicht kommen prinzipiell alle temperaturstabilen Kunststoffschichten mit Affinität zu den zu transferierenden Farbstoffen in Betracht, z.B. modifizierte Polycarbonate oder Polyester. Weitere Einzelheiten dazu können z.B. aus der US-A-5 132 438 oder den entsprechenden dort zitierten Patentanmeldungen entnommen werden.

Die Übertragung erfolgt mittels einer Energiequelle, z.B. mittels eines Lasers oder eines Thermokopfes, wobei letzterer auf eine Temperatur von ≥ 300°C aufheizbar sein muß, damit der Farbstofftransfer im Zeitbereich t: 0 < t < 15 msec erfolgen kann. Dabei migriert der Farbstoff aus dem Transferblatt und diffundiert in die Oberflächenbeschichtung des Aufnahmemediums.

Die erfindungsgemäßen Azofarbstoffe der Formel I zeichnen sich durch vorteilhafte anwendungstechnische Eigenschaften aus. Sie weisen eine hohe Löslichkeit im Farbband (gute Kompatibilität mit dem Bindemittel), eine hohe Stabilität in der Druckfarbe, eine gute Transferierbarkeit und eine hohe Bildstabilität (d.h. gute Lichtechtheit sowie gute Stabilität gegenüber Umwelteinflüssen, z.B. Feuchtigkeit, Temperatur oder Chemikalien) auf und erlauben eine flexible coloristische Anpassung an bereits vorgegebene subtraktive Grundfarben im Sinne einer optimalen Trichromie (Farbstoffmischung).

Die neuen Farbstoffe eignen sich auch als Komponenten für Schwarzmischungen.

Außerdem zeichnen sie sich zum Teil durch hohe Brillanz aufgrund der hohen Transparenz im blauen und roten Spektralbereich aus.

Die erfindungsgemäßen Azofarbstoffe der Formel I eignen sich weiterhin vorteilhaft zum Färben oder Bedrucken von synthetischen Materialien, z.B. von Polyestern, Polyamiden oder Polycarbonaten. Insbesondere zu nennen sind textile Materialien, wie Fasern, Garne, Zwirne, Maschenware, Webware oder Non-wovens aus Polyester, modifiziertem Polyester, z.B. anionisch modifiziertem Polyester, oder Mischgewebe von Polyestern mit Cellulose, Baumwolle, Viskose oder Wolle. Die Farbe- und Druckbedingungen sind an sich bekannt. Die erfindungsgemäßen Farbstoffe können auch zum Färben von keratinischen Fasern, z.B. bei der Haarfärbung oder der Färbung von Pelzen, verwendet werden.

Die neuen Azofarbstoffe der Formel I eignen sich weiterhin vorteilhaft für die Herstellung von Farbfiltern, wie sie z.B. in der EP-A-399 473 beschrieben sind.

Schließlich können sie auch vorteilhaft als Farbstoffe für die Herstellung von Tonern für die Elektrophotographie verwendet werden.

Die folgenden Beispiele sollen die Erfindung näher erläutern.

### A) Herstellung

### Beispiel 1

22,2 g 3-Methyl-4-cyano-5-aminoisothiazol wurden in 150 ml Eisessig/Propionsäure (7:3 v/v) angerührt. Dazu wurden 6 ml konzentrierte schwefelsäure gegeben und bei 0 bis 5°C 48 g Nitrosylschwefelsäure zugetropft. Man rührte 3 h bei 0 bis 5°C@@@@ nach. Die Diazoniumsalzlösung wurde dann bei 0 bis 5°C in eine Lösung von 52 g 2-Dibutylamino-4-tert-butylthiazol (82,9 gew.-%ig) in 100 ml N,N-Dimethylformamid getropft.
Danach wurde mit 20 g Natriumacetat gepuffert. Man rührte bei Raumtemperatur nach, saugte dann ab, wusch mit Methanol und Wasser nach und trocknete. Man erhielt 55,8 g (83,5 % d.Th) des Farbstoffs der Formel 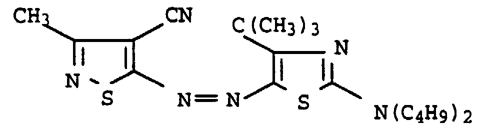 Fp.: 202°C; λₘₐₓ (in THF) : 527 nm

### Beispiel 2

5,2 g 2,5-Dichlor-4-nitroanilin wurden in 10 g 96 gew. %iger Schwefelsäure bei 20 bis 30°C angerührt und dann bei 15 bis 20°C mit 13 g Nitrosylschwefelsäure versetzt. Diese resultierende Lösung wurde auf 50 ml Wasser und 100 g Eis gegeben, 15 min nachgerührt und filtriert. Die filtrierte Lösung wurde bei 0 bis 5°C in eine Lösung von 9,3 g 2-Dibutylamino-4-tert-butylthiazol in 100 ml Methanol getropft. Man rührte über Nacht bei Raumtemperatur nach, saugte dann ab, wusch mit Methanol und Wasser nach und trocknete.

Man erhielt 9,58 g (78,8 % d.Th.) des Farbstoffs der Formel 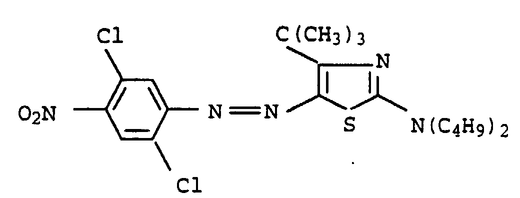 Fp.: 164°C; λₘₐₓ (in THF):522 nm

### Beispiel 3

5,2 g 2-Aminoterephtalsäuredimethylester wurden in 25 ml Eisessig und 10 ml konzentrierter Salzsäure angerührt und bei 0 bis 5°C mit 8 ml 23 gew.-%iger wäßriger Natriumnitritlösung versetzt. Man rührte 1 h bei 0 bis 5°C nach und gab dann bei 0 bis 5°C zu einer Lösung von 9,2 g 2-Dibutylamino-4-tert-butylthiazol in 200 ml Methanol. Dann pufferte man mit 10 g Natriumacetat, rührte nach, saugte ab, wusch mit Methanol und Wasser nach und trocknete.

Man erhielt 6,23 g (51 % d.Th.) des Farbstoffs der Formel 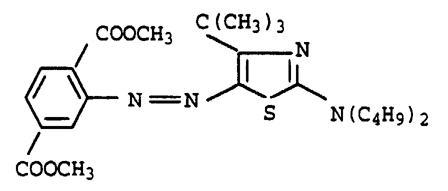 Fp.: 74°C; λₘₐₓ (in THF) :462 nm

In analoger Weise können die in der folgenden Tabelle 1 aufgeführten Farbstoffe erhalten werden.

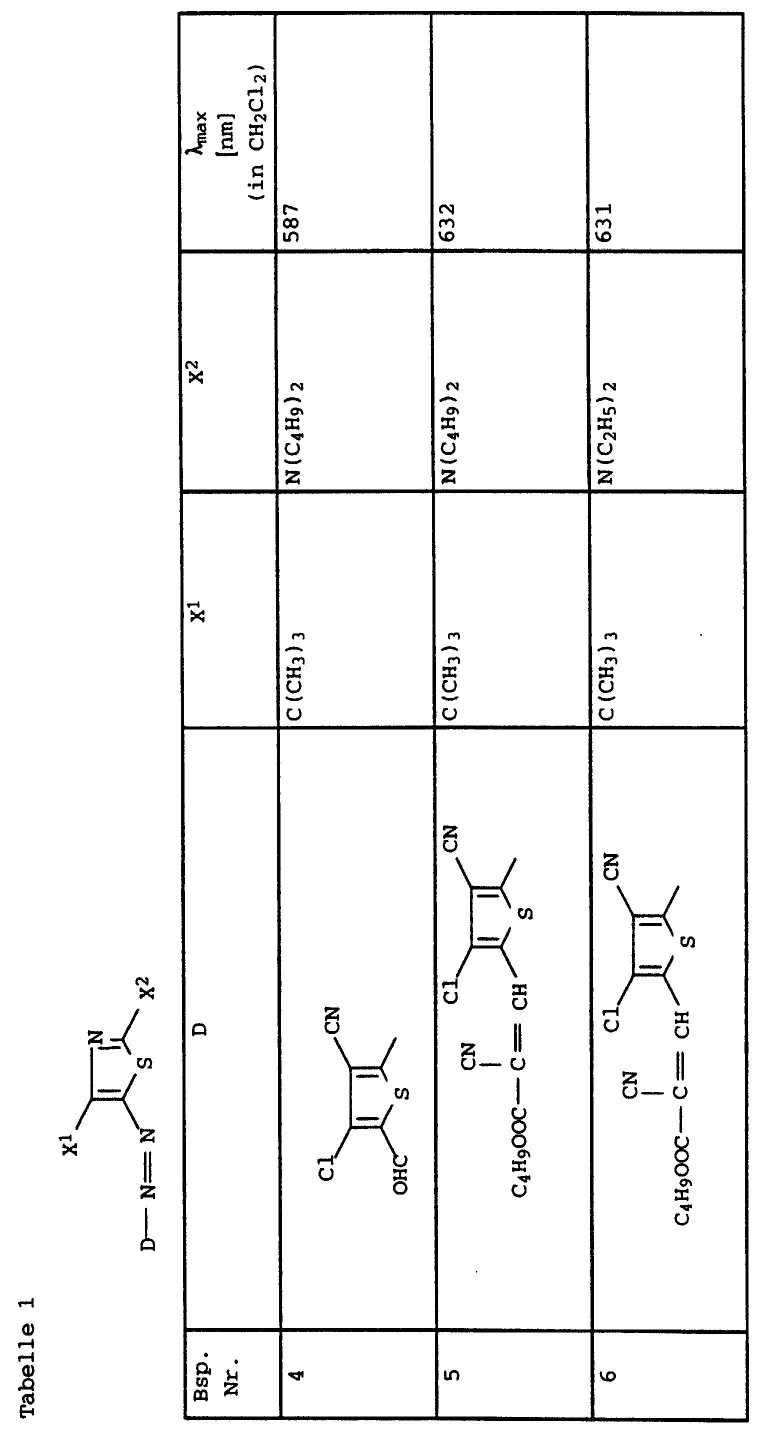

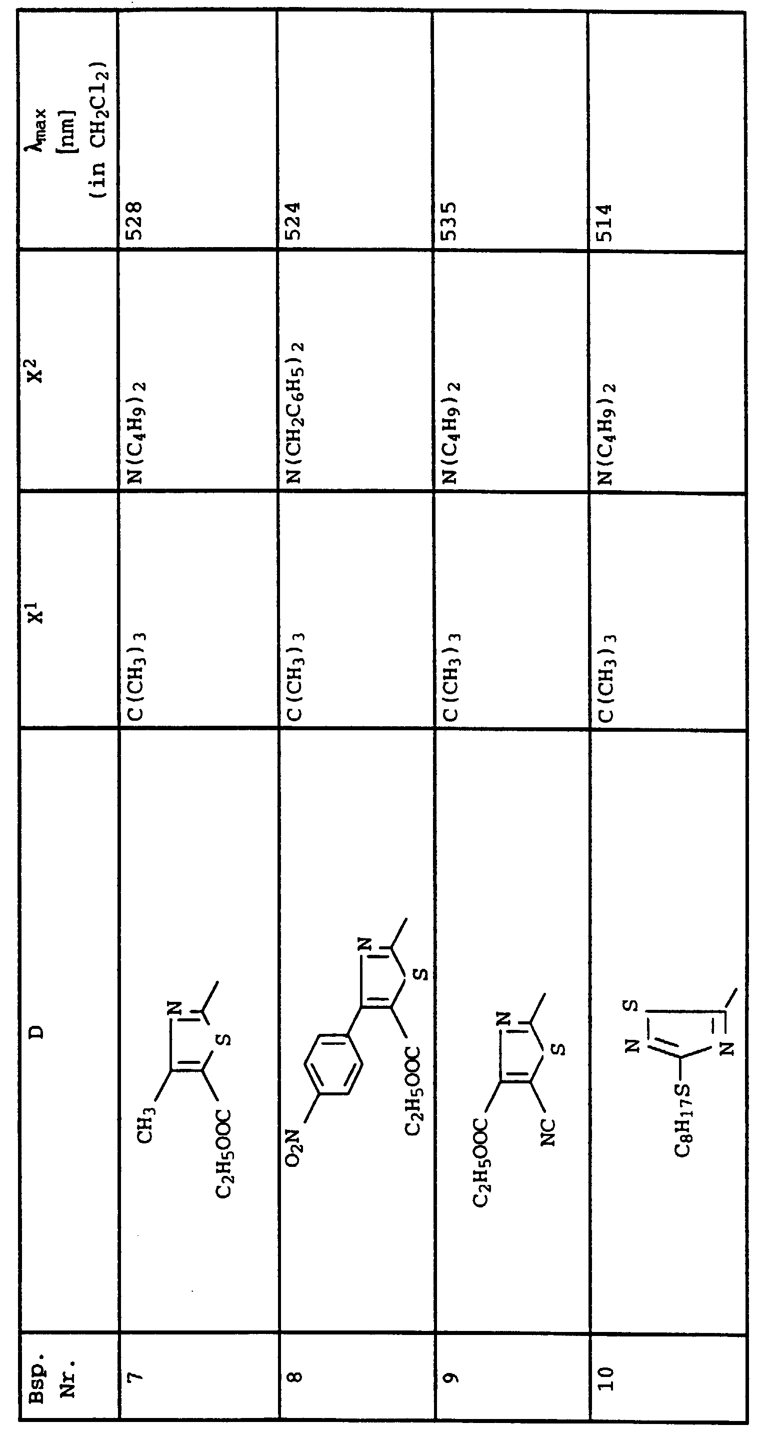

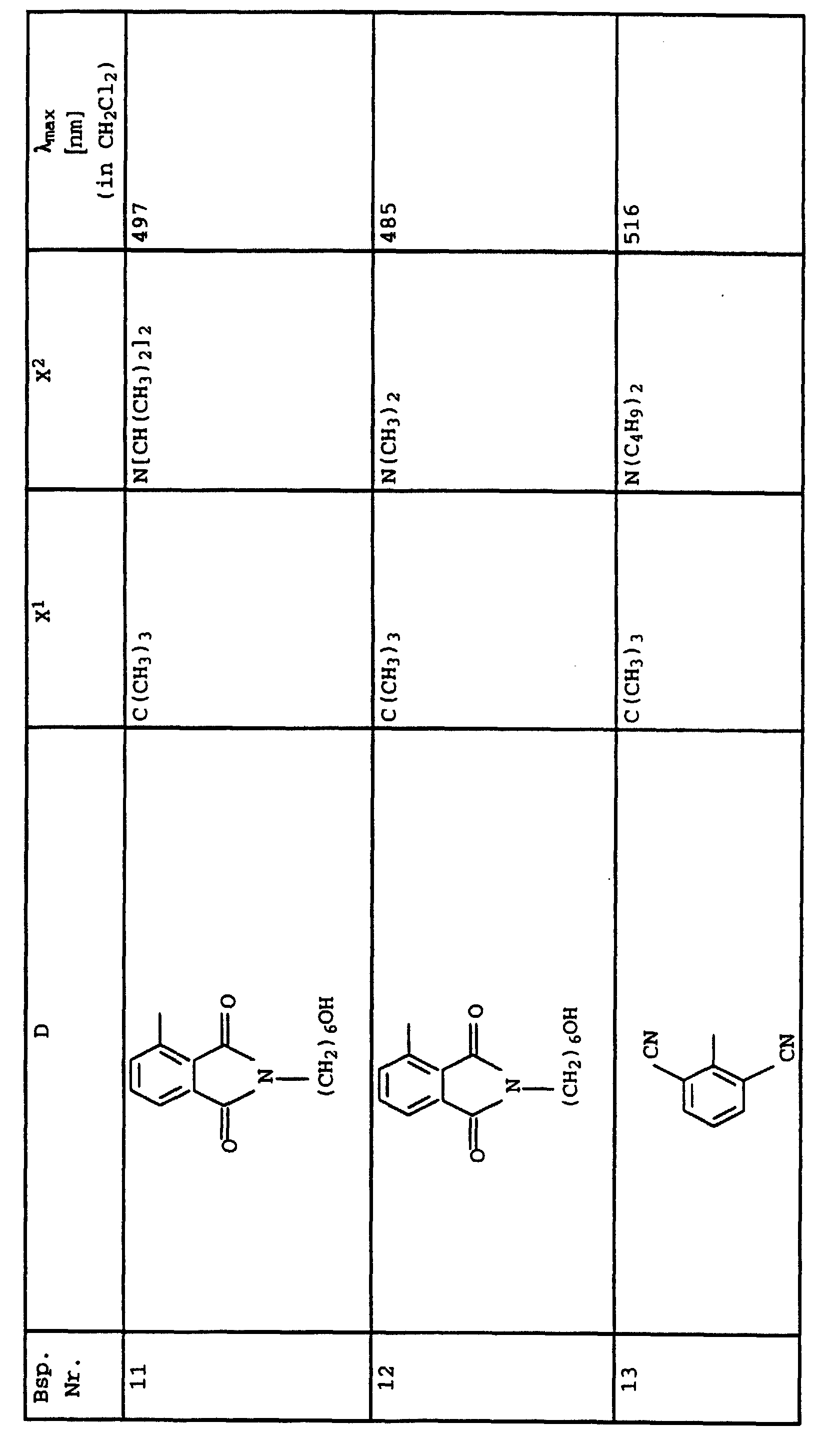

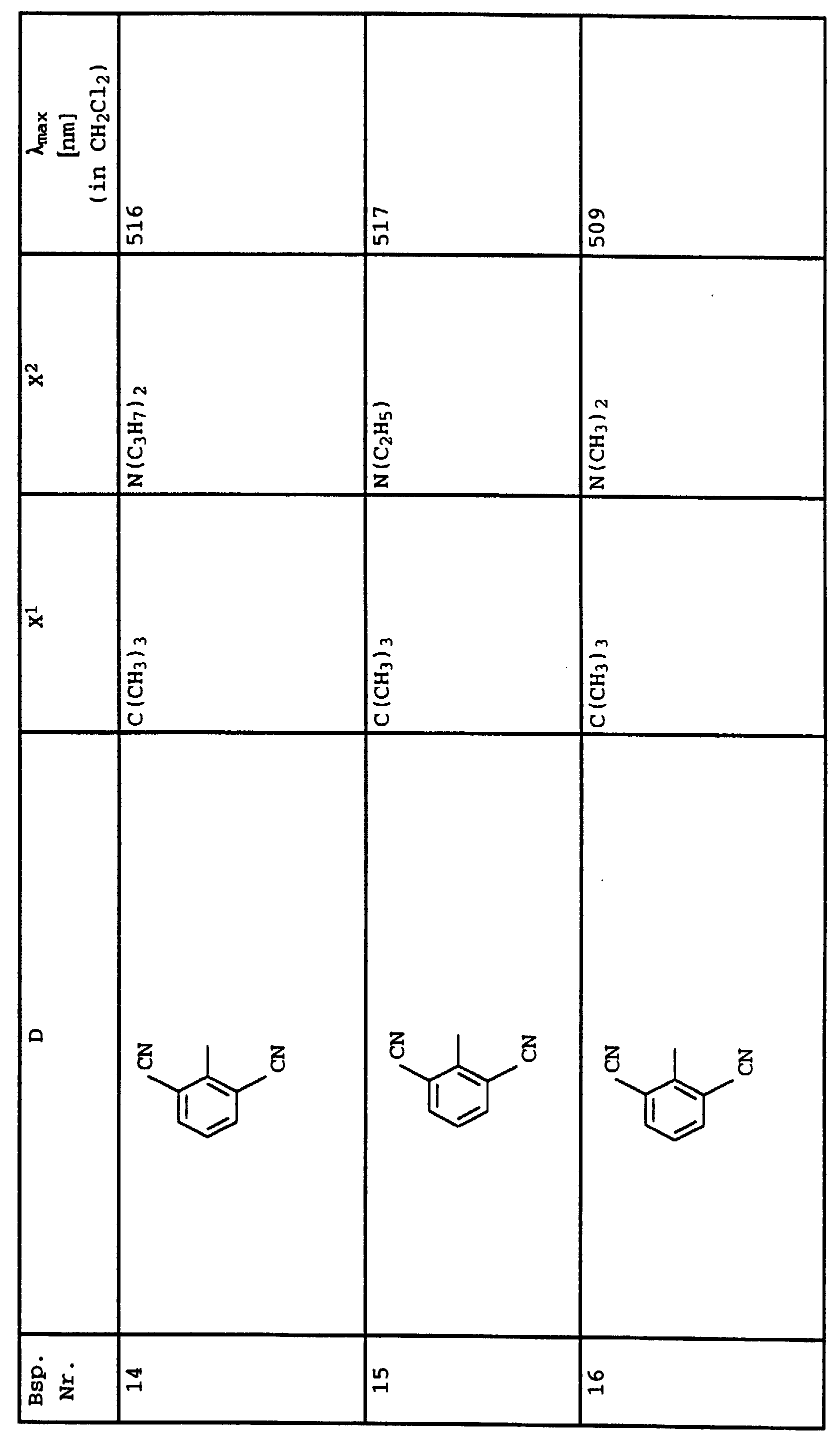

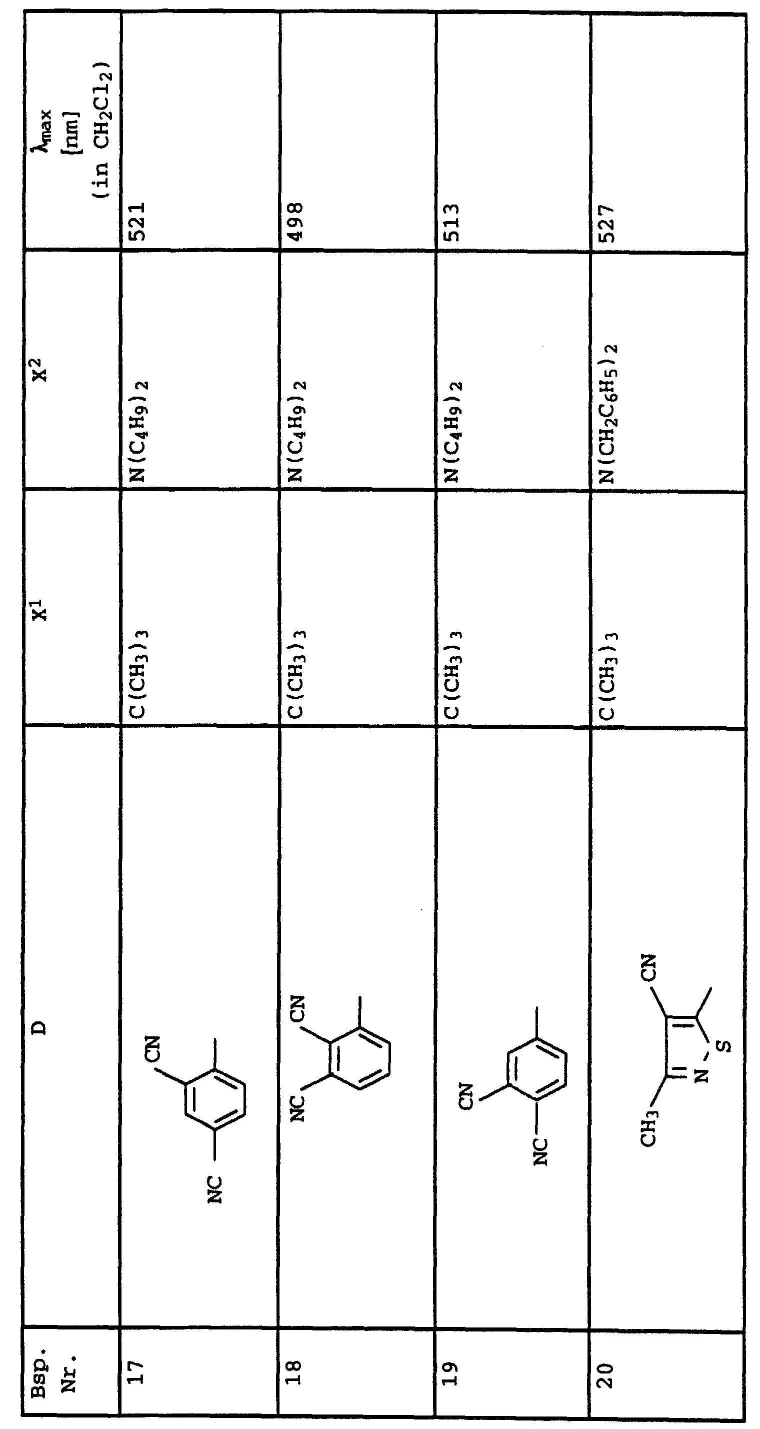

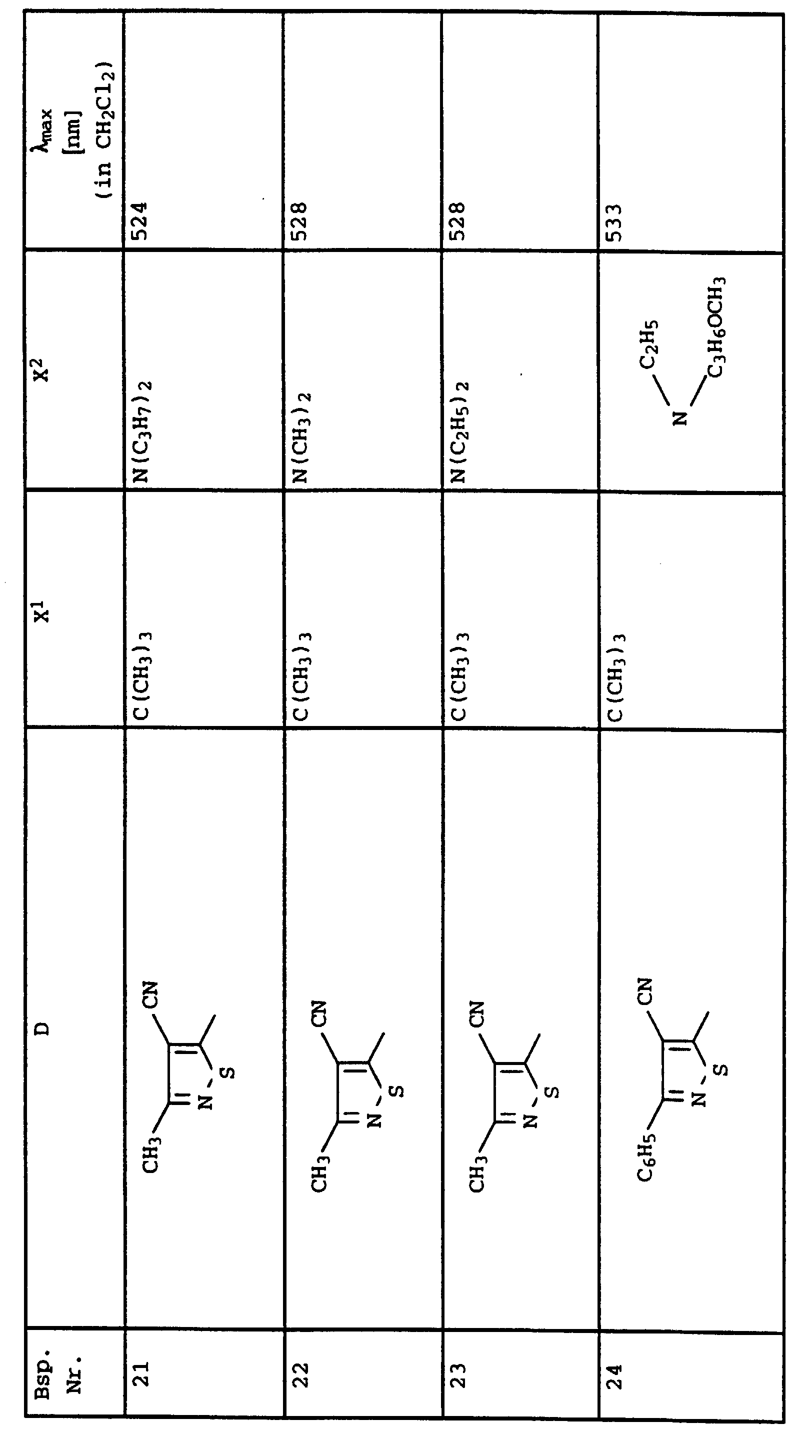

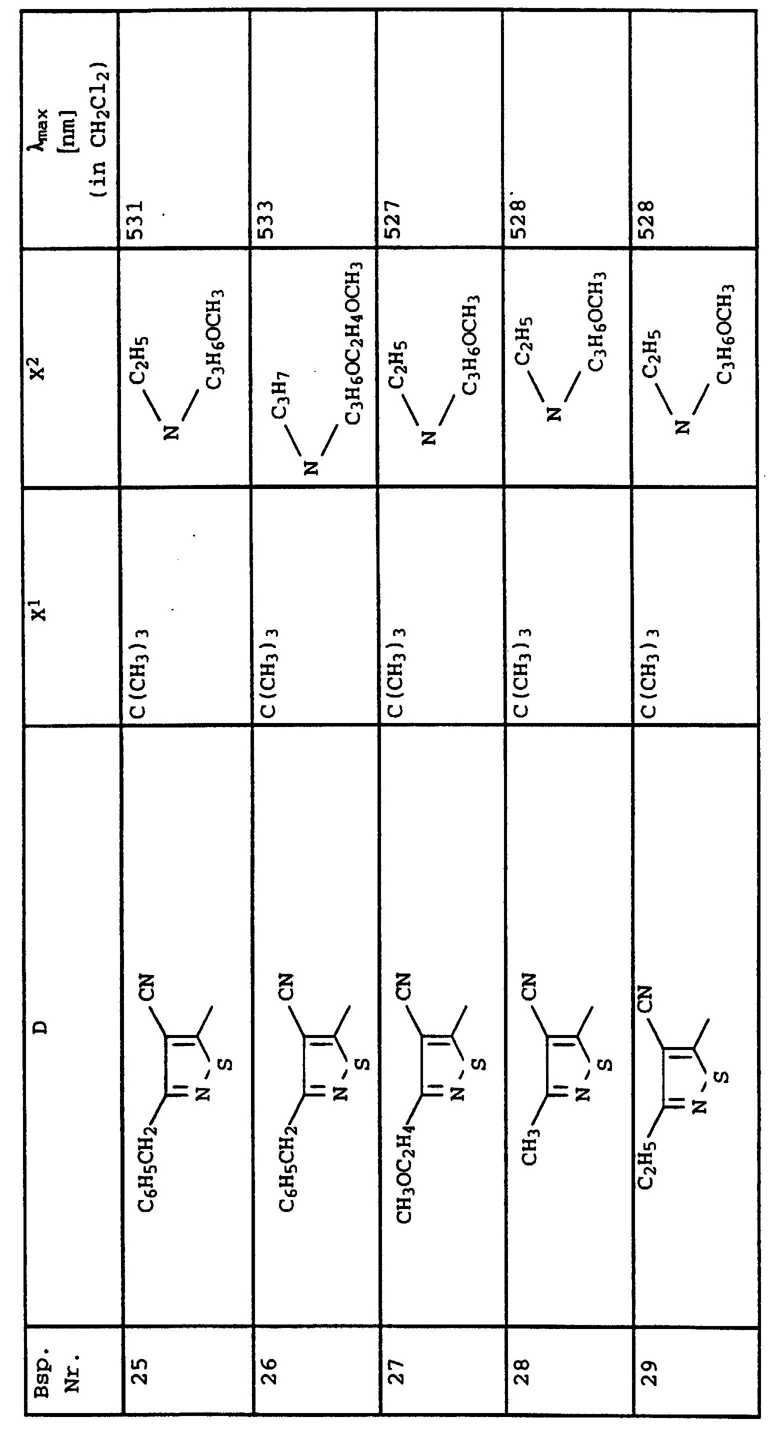

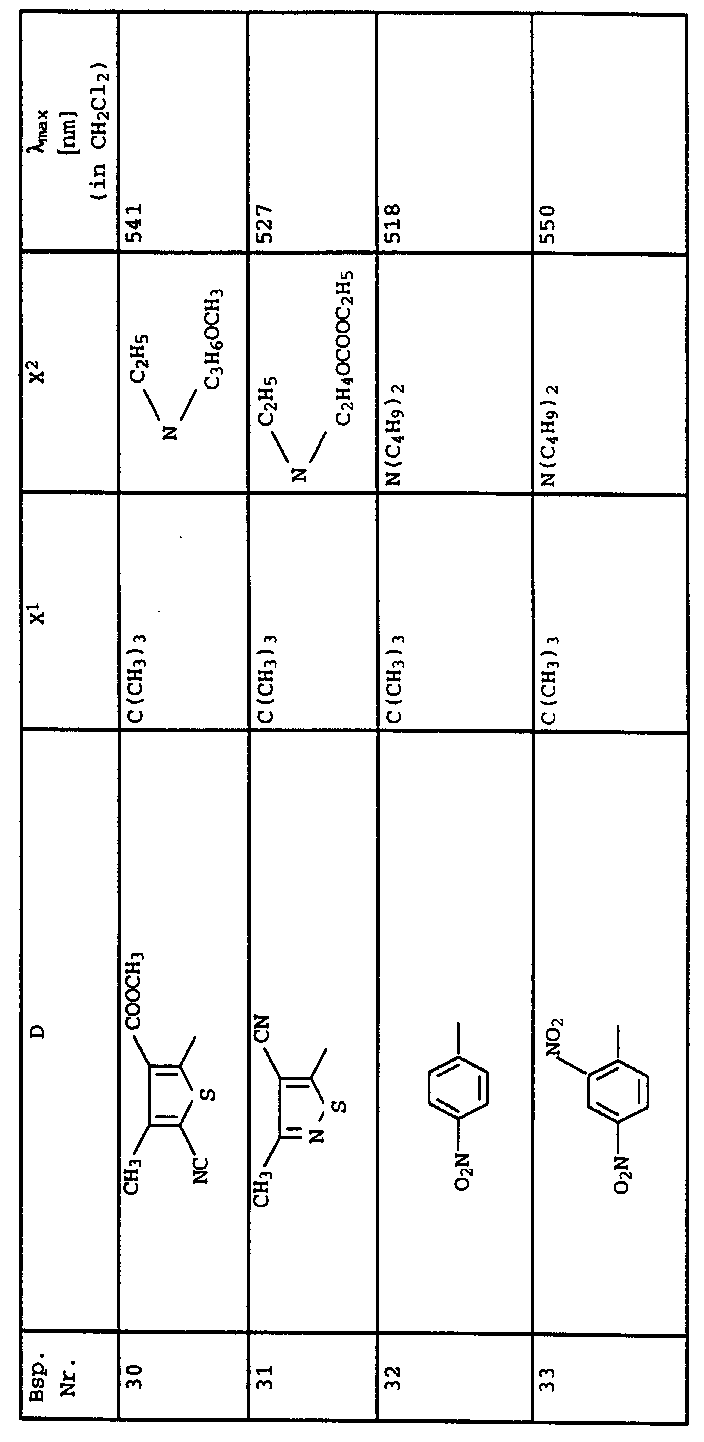

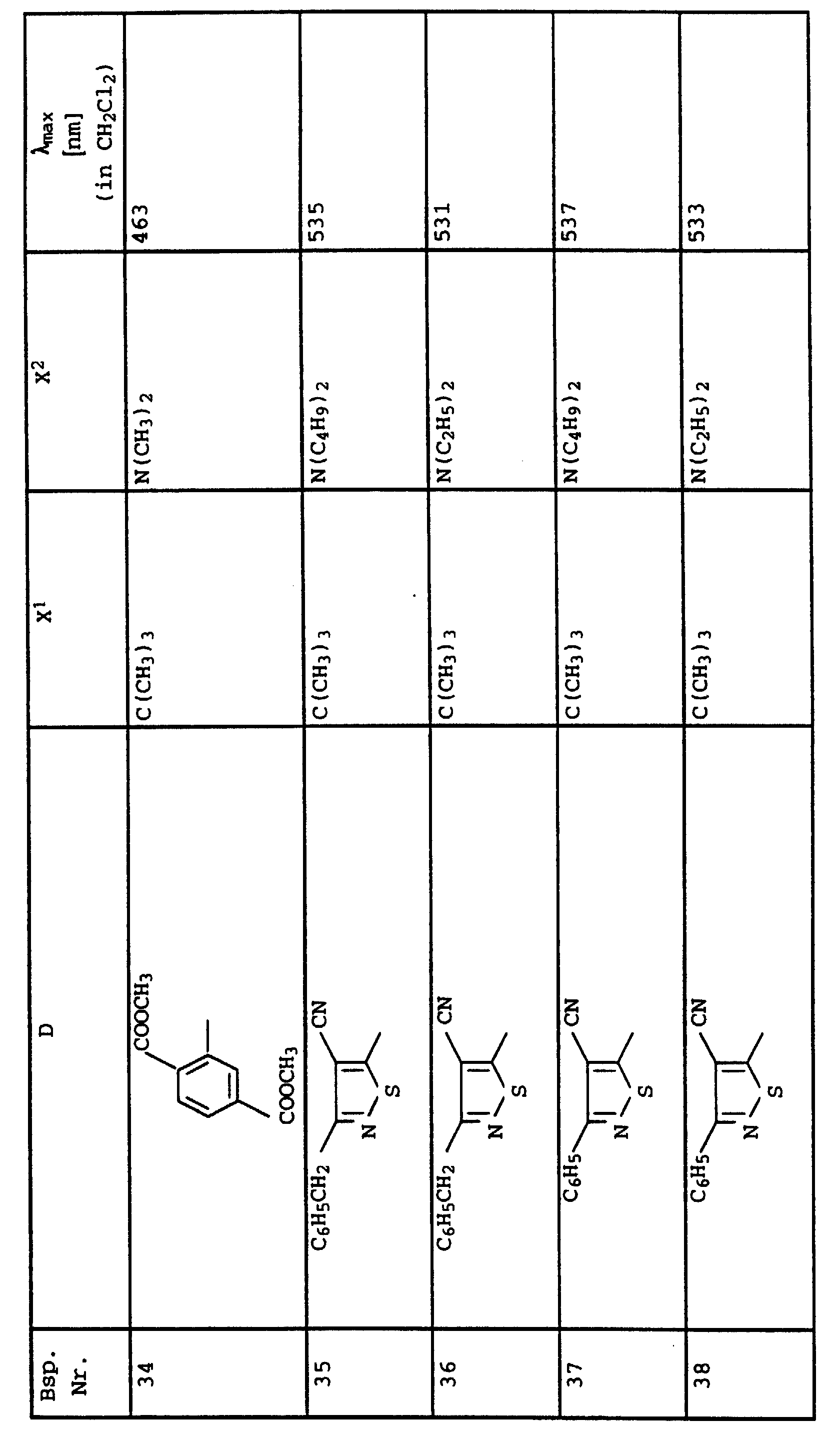

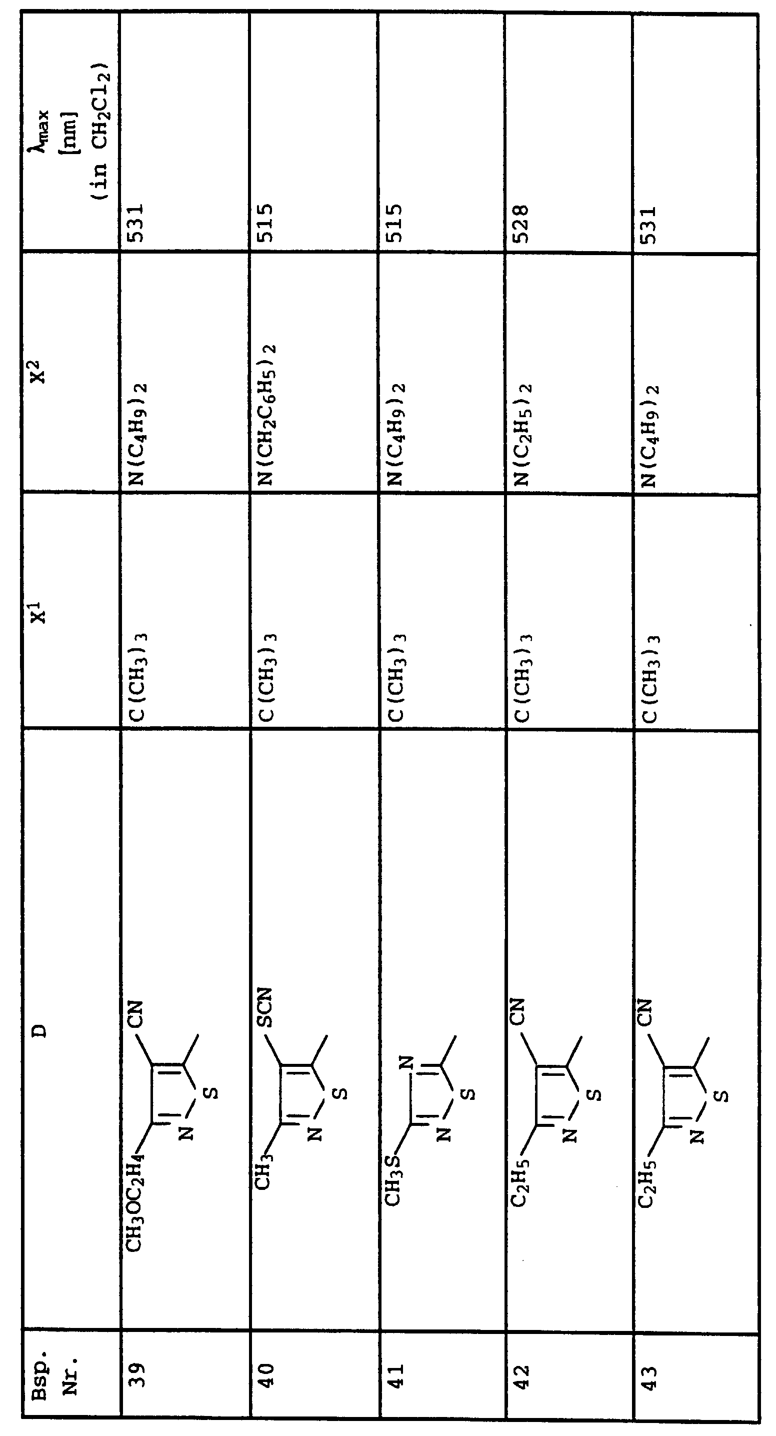

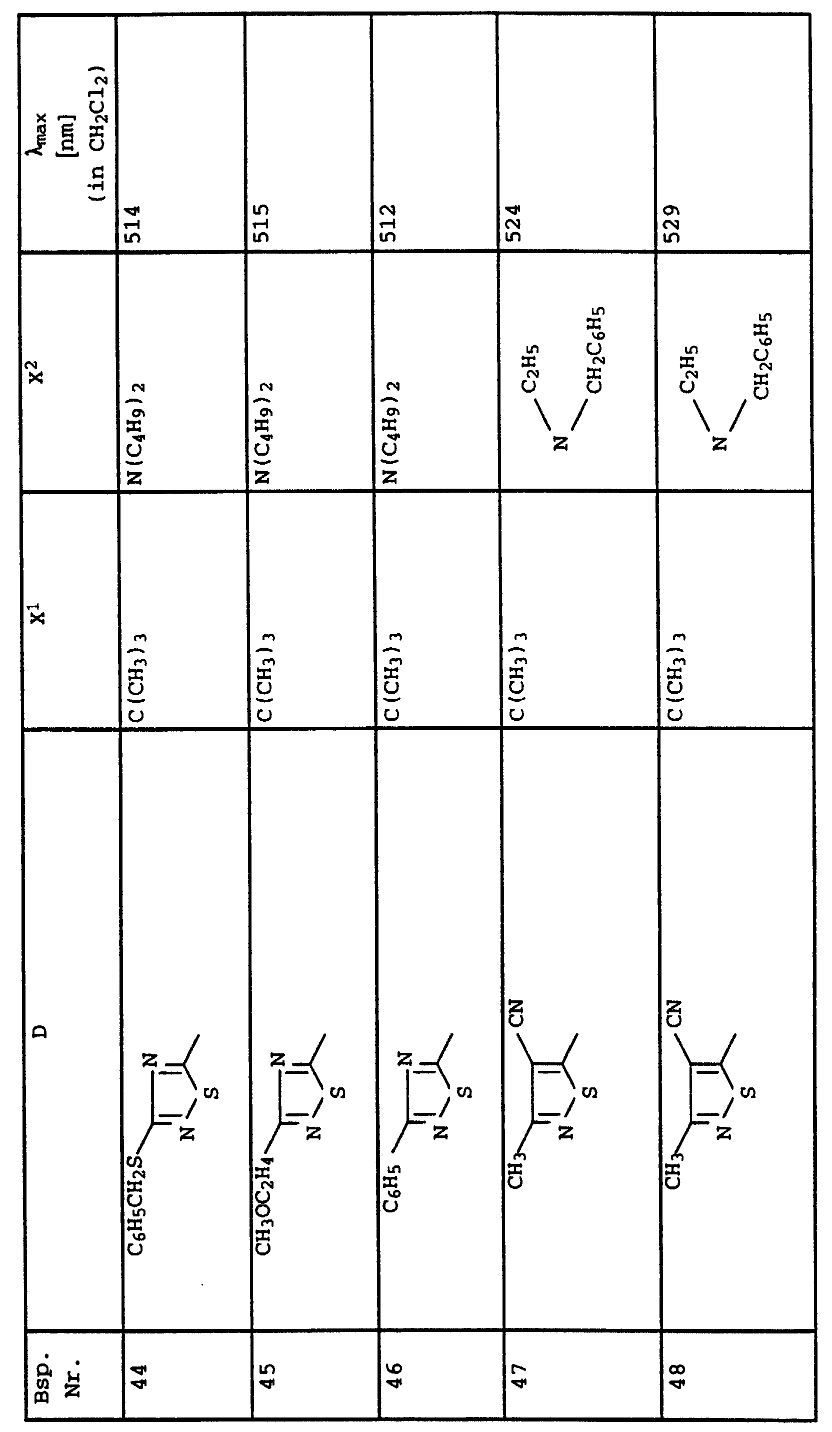

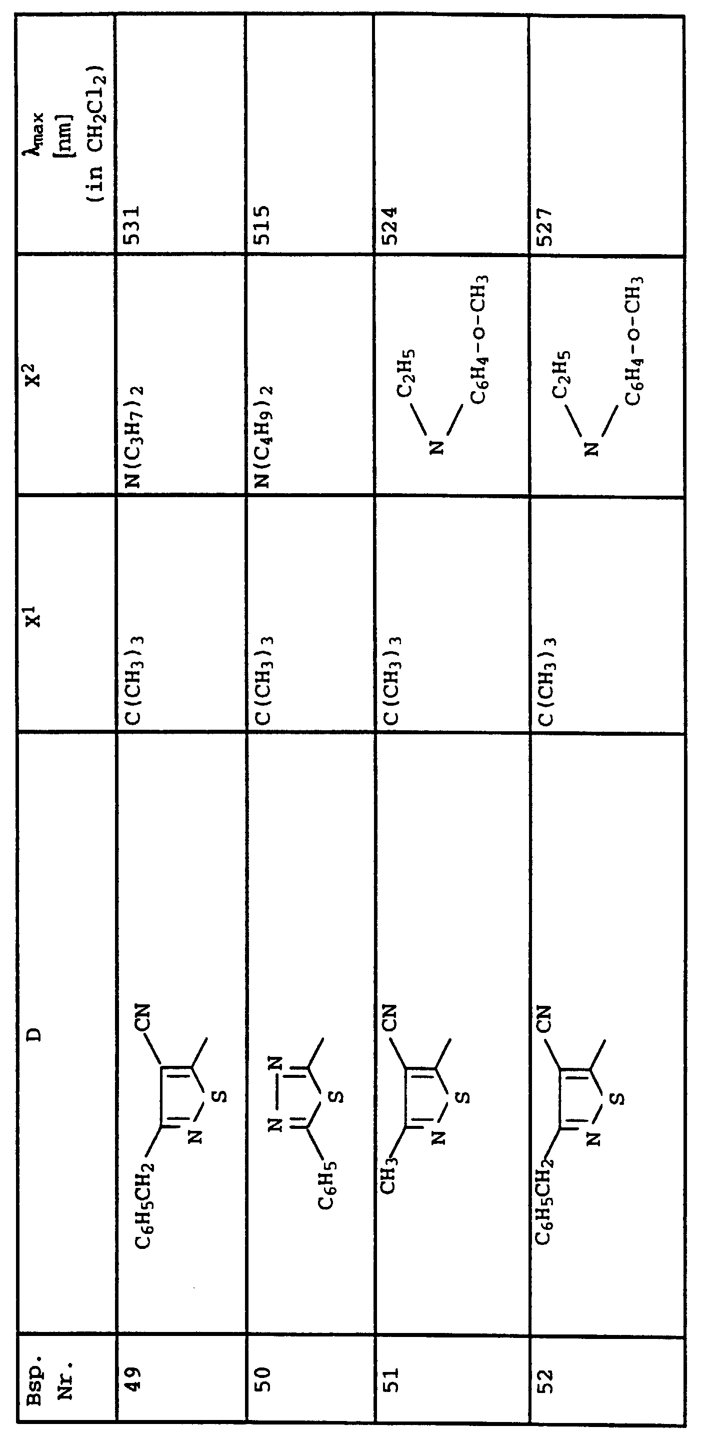

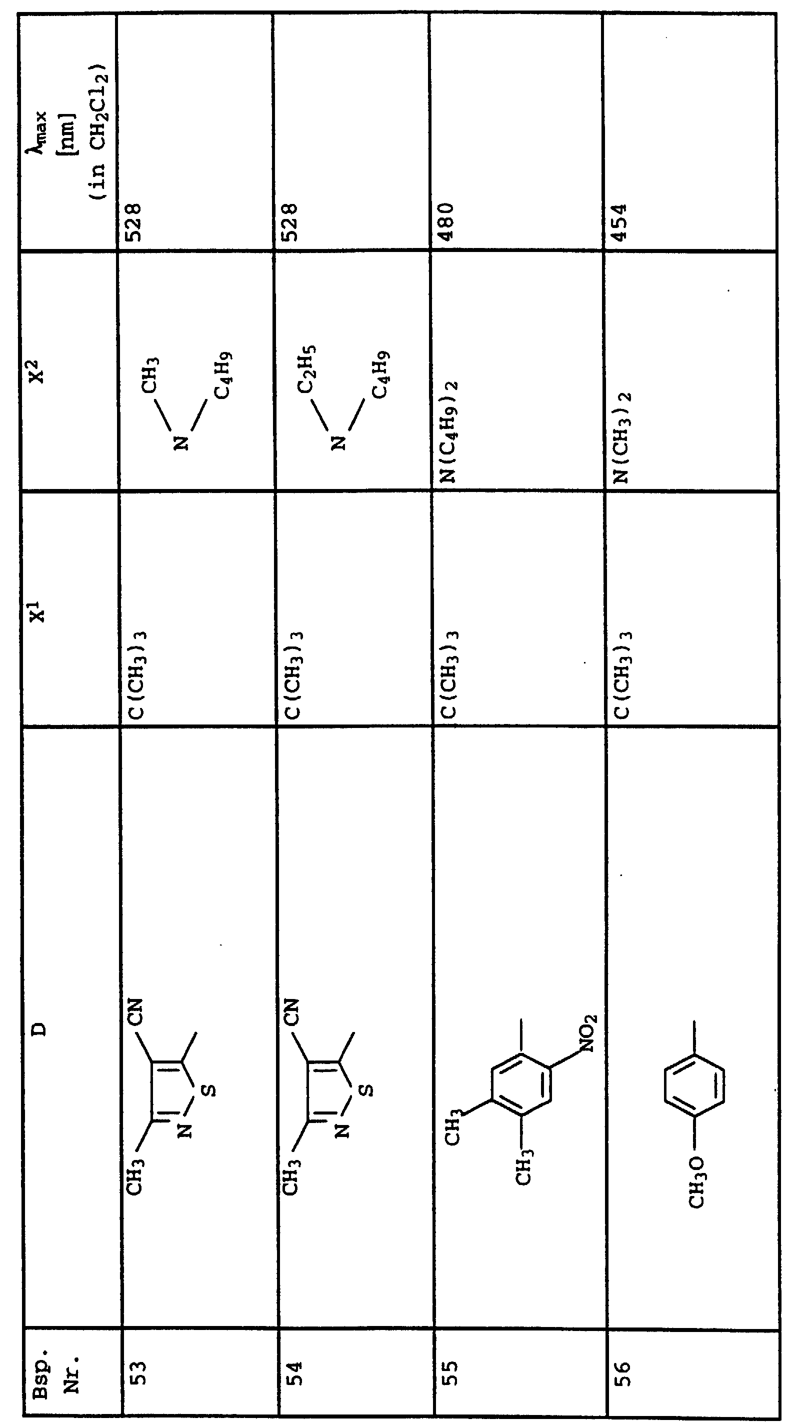

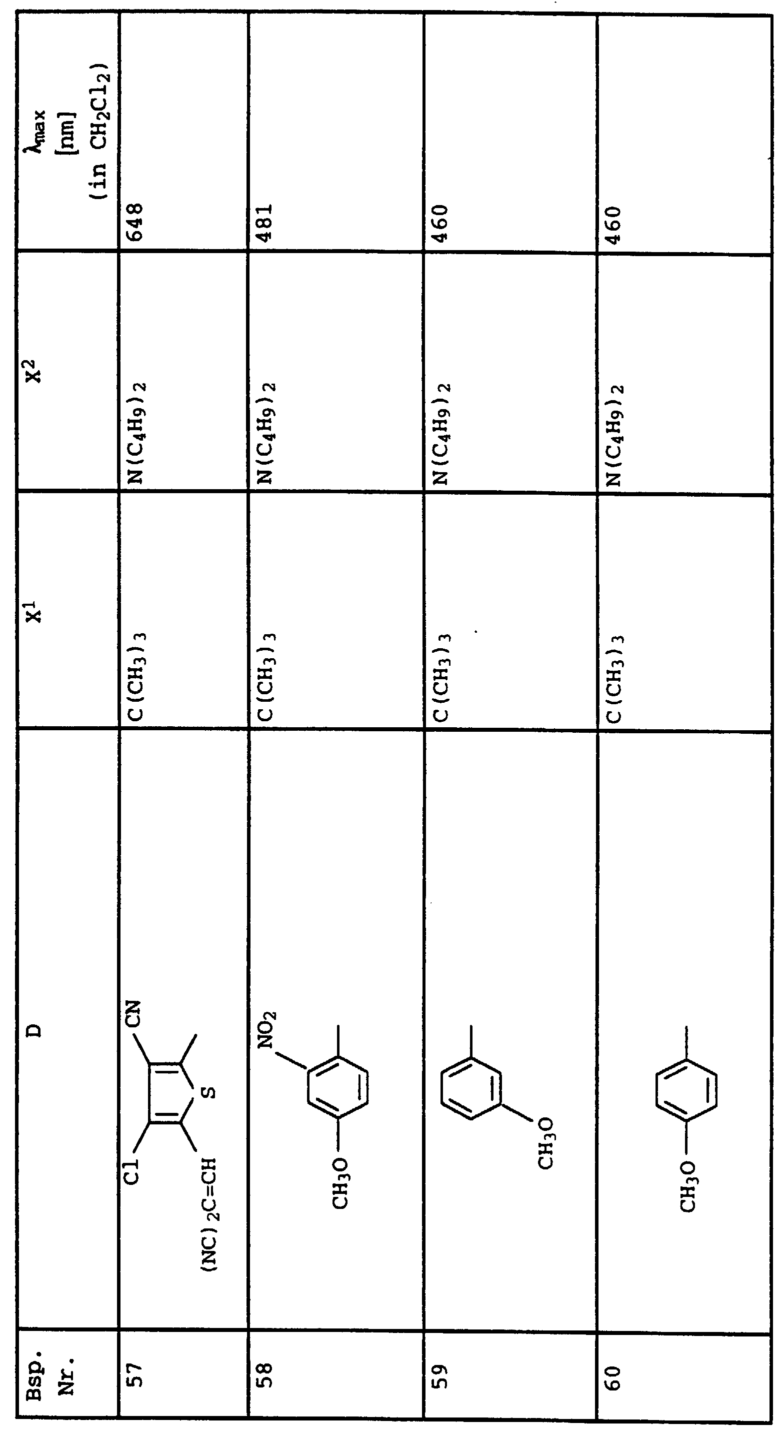

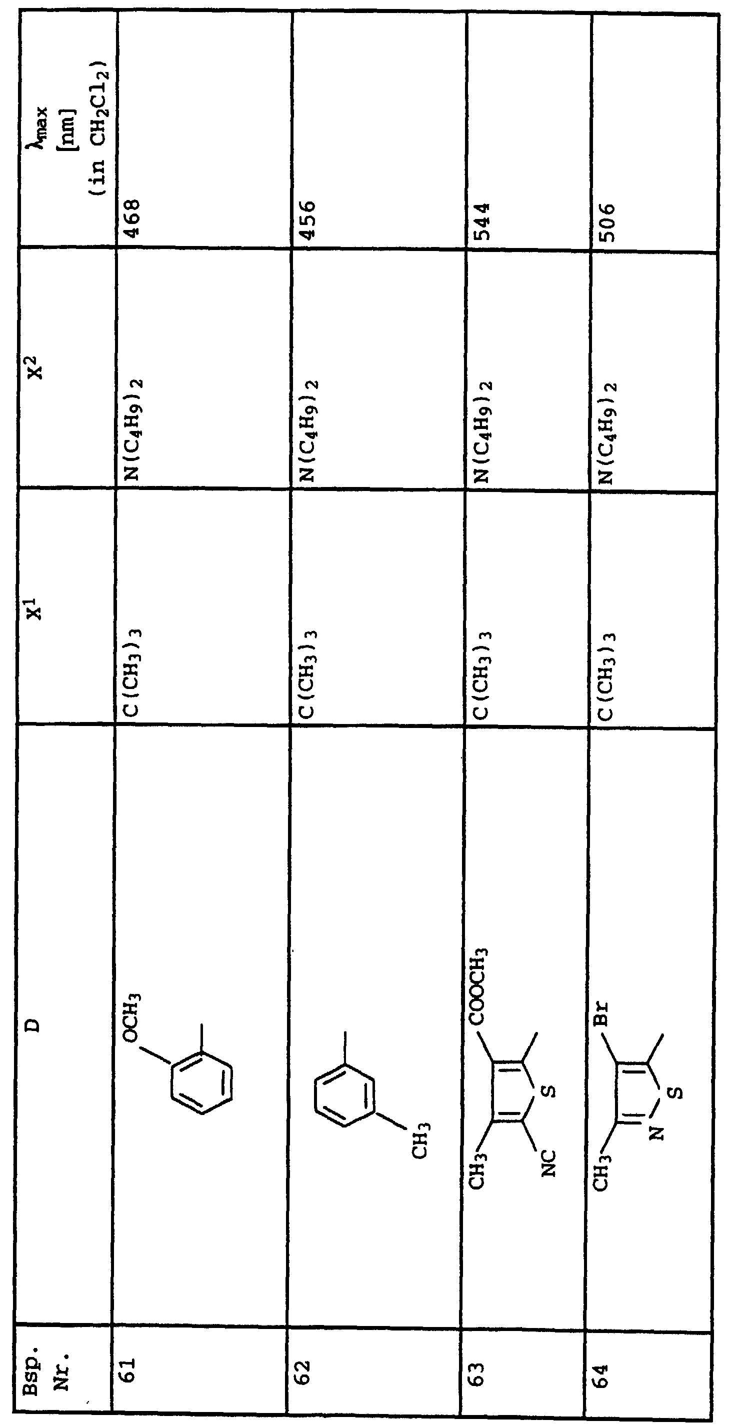

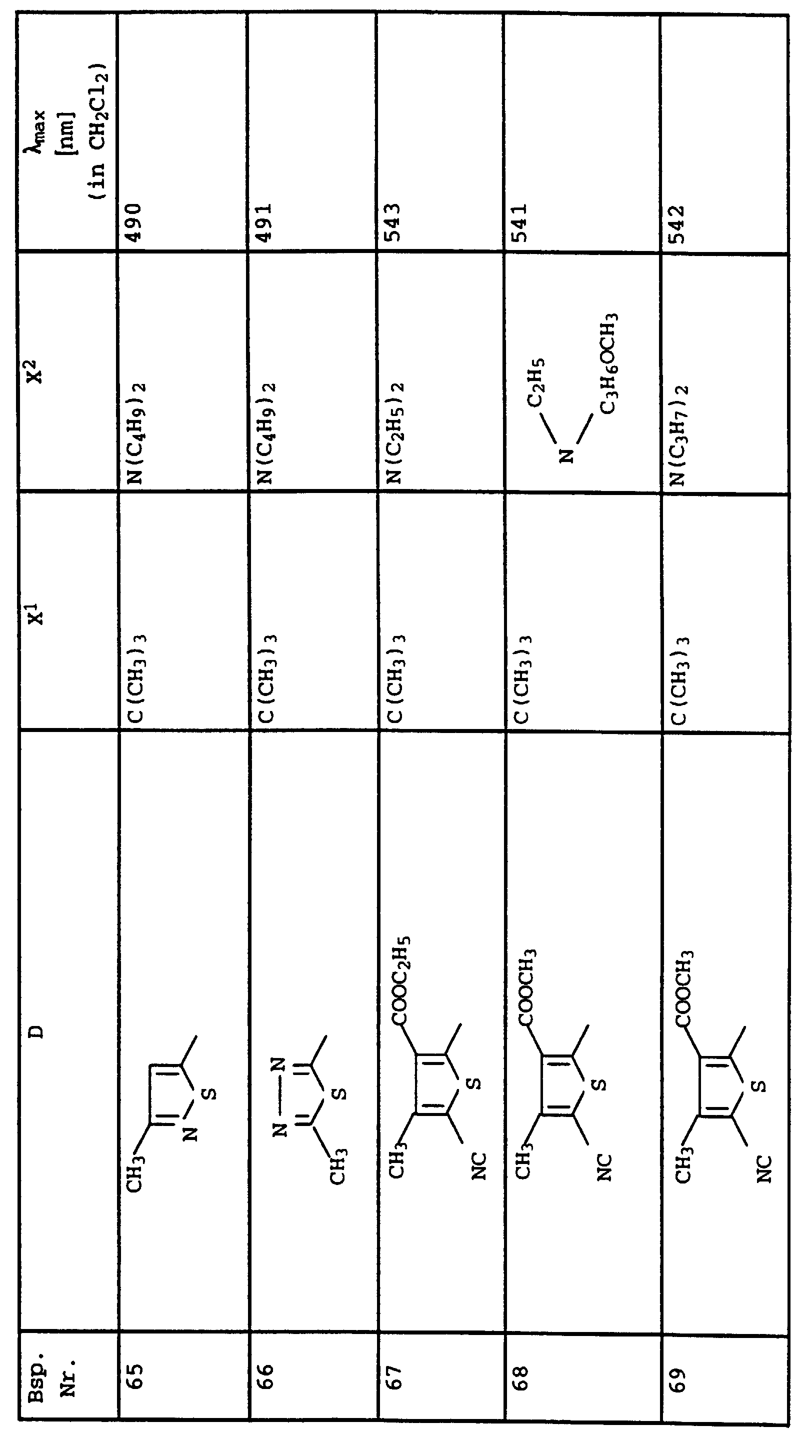

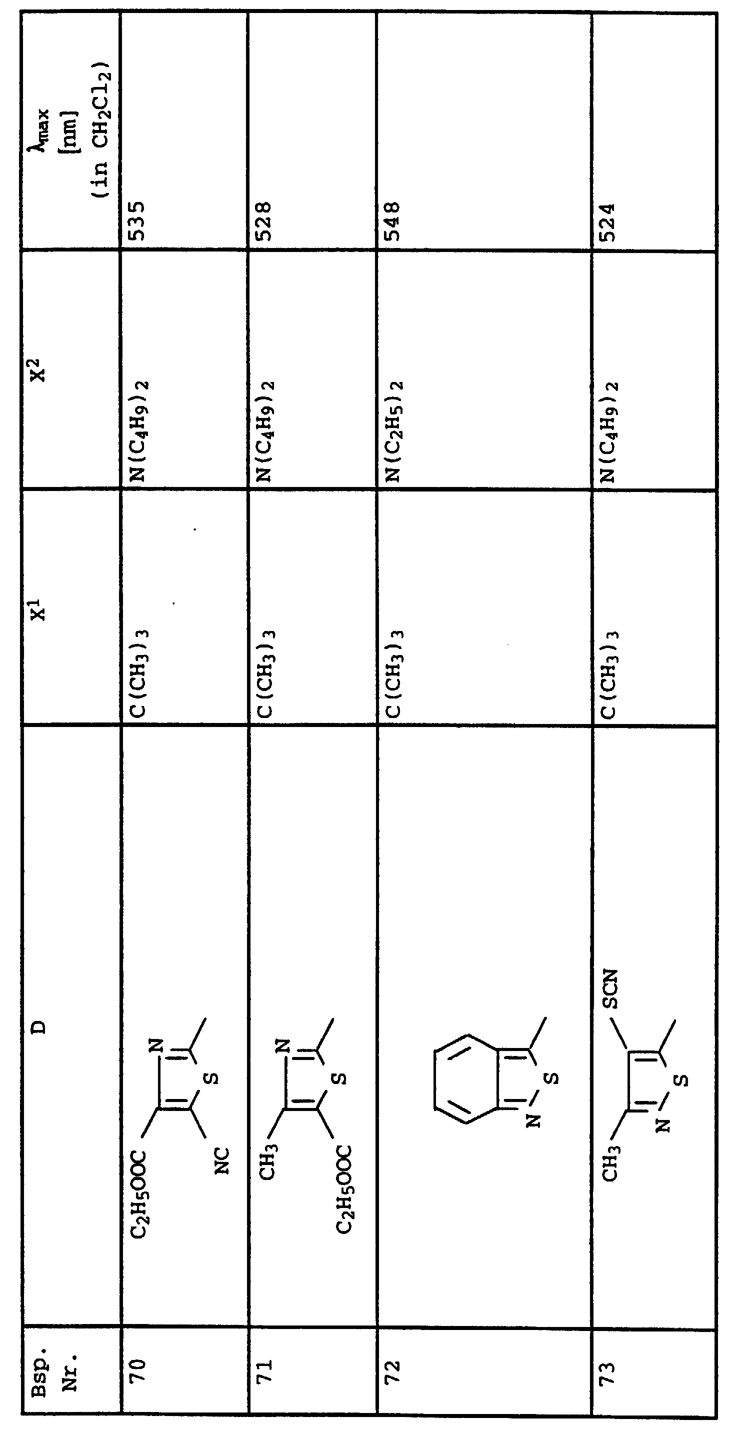

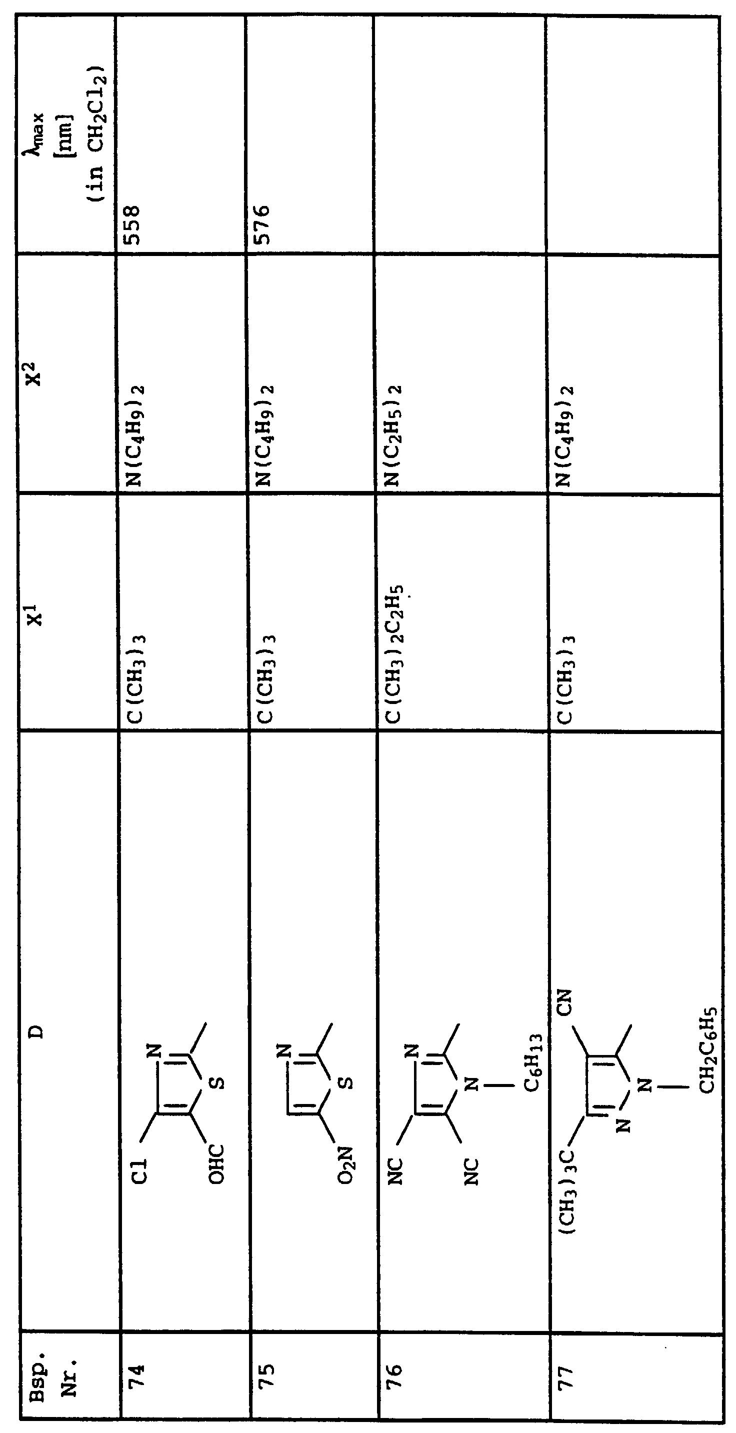

### B) Anwendung im Thermotransfer

Vorschrift für den thermischen Transfer
a) 10 g Farbstoff werden, gegebenenfalls unter kurzzeitigem Erwärmen auf 80 bis 90°C, in 100 g einer 10 gew.-%igen Lösung eines Bindemittels in einem Methylethylketon/ Toluol/Cyclohexanon-Gemisch (4,5:2:2 v/v/v) eingerührt.
   Das Gemisch wird mit einer 6 µm Rakel auf eine Polyesterfolie von 6 µm Dicke, auf deren Rückseite eine geeignete Gleitschicht aufgebracht ist, aufgerakelt und mit einem Föhn 1 Minute trockengeblasen. Bevor das Farbband verdruckt werden kann, muß es mindestens 24 Stunden an der Luft nachtrocknen, da Restlösungsmittel den Druckvorgang beeinträchtigen können.
b) Die Farbbänder werden auf einer rechnergesteuerten Versuchsanordnung, die mit einem handelsüblichen Thermokopf ausgestattet ist, auf handelsübliches Videoprinterpapier (Color Videoprint Paper der Firma Hitachi) verdruckt.
   Durch Veränderung der Spannung wird die Energieabgabe des Thermokopfs gesteuert, wobei die eingestellte Impulsdauer 7 ms beträgt und immer nur ein Impuls abgegeben wird. Die abgegebene Energie liegt zwischen 0,7 und 2,0 mJ/Dot.
   Da die Höhe der Anfärbung direkt proportional der zugeführten Energie ist, kann ein Farbkeil erzeugt und spektroskopisch ausgewertet werden.
   Aus der graphischen Auftragung der Farbtiefe gegen die zugeführte Energie je Heizelement wird der Q*-Wert (= Energie in mJ für den Extinktionswert 1) und die Steigung m in 1/mJ ermittelt.

Die erhaltenen Ergebnisse sind zusammen mit den λₘₐₓ-Werten (gemessen auf dem Videoprintpapier) in der folgenden Tabelle 2 aufgeführt.

Als Bindemittel diente dabei jeweils ein Produkt auf Basis von gesättigtem linearen Polyester und auf Basis von Polyvinylbutyral, wobei bezüglich der Q*- und m-Werte der jeweils erste Wert in den Tabellen bei Anwendung des Polyesters und der jeweils zweite Wert in den Tabellen bei Anwendung von Polyvinylbutyral als Bindemittel gemessen wurde.

**Tabelle 2**

| Farbstoff Nr. | Q* [mJ/Dot] | m [1/mJ] | λₘₐₓ [nm] |
|---|---|---|---|
| 1 | 0,87 0,93 | 3,00 2,40 | 534 |
| 4 | 1,05 1,07 | 2,17 2,31 | 582 |
| 5 | 1,20 1,32 | 1,75 1,06 | 637 |
| 7 | 0,89 1,02 | 2,86 1,78 | 531 |
| 8 | 1,38 1,84 | 1,38 0,82 | 528 |
| 9 | 0,89 0,95 | 2,86 2,30 | 540 |
| 10 | 1,00 0,99 | 1,22 2,11 | 518 |
| 11 | 1,00 1,10 | 1,97 1,69 | 492 |
| 12 | 0,99 1,07 | 2,05 1,85 | 485 |
| 13 | 0,99 0,97 | 2,02 2,08 | 540 |
| 14 | 0,86 0,94 | 2,70 2,40 | 520 |
| 15 | 0,78 0,84 | 2,80 3,56 | 515 |
| 16 | 1,01 1,13 | 2,01 1,74 | 515 |
| 17 | 0,89 1,01 | 3,70 2,63 | 523 |
| 18 | 0,91 0,98 | 3,29 2,60 | 502 |
| 19 | 0,92 1,01 | 3,12 2,50 | 515 |
| 20 | 0,92 0,98 | 2,80 2,50 | 530 |
| 21 | 0,89 1,13 | 2.14 1,71 | 527 |
| 23 | 0,86 0,87 | 3,12 3,12 | 534 |
| 24 | 0,96 1,07 | 2,20 1,95 | 537 |
| 25 | 0,87 0,92 | 3,03 2,59 | 537 |
| 26 | 0,92 0,99 | 2,24 2,32 | 537 |
| 27 | 0,86 0,85 | 2,85 2,79 | 535 |
| 28 | 0,85 0,90 | 3,34 3,21 | 531 |
| 29 | 0,85 0,90 | 3,14 3,04 | 532 |
| 30 | 0,87 1,01 | 2,85 2,04 | 549 |
| 31 | 0,91 | 3,00 | 531 |
| 32 | 0,79 | 2,74 | 518 |
| 33 | 0,83 | 3,63 | 554 |
| 34 | 1,02 | 2,06 | 458 |
| 35 | 0,90 0,89 | 2,56 2,42 | 536 |
| 36 | 0,88 0,92 | 2,87 2,50 | 535 |
| 37 | 0,92 0,92 | 2,56 2,20 | 540 |
| 38 | 0,90 0,90 | 2,68 2,71 | 536 |
| 39 | 0,88 0,95 | 2,34 2,28 | 537 |
| 40 | 1,10 1,07 | 1,61 | 518 |
| 41 | 0,89 0,96 | 2,65 2,08 | 514 |
| 42 | 0,85 0,92 | 2,88 2,85 | 529 |
| 43 | 0,86 0,86 | 3,39 3,36 | 531 |
| 44 | 0,91 0,96 | 2,26 2,34 | 516 |
| 45 | 0,90 1,02 | 2,44 2,01 | 520 |
| 46 | 0,95 0,99 | 2,44 2,31 | 514 |
| 47 | 0,87 0,93 | 3,43 2,75 | 531 |
| 48 | 0,95 0,92 | 2,38 2,65 | 534 |
| 49 | 0,90 0,96 | 2,98 2,45 | 534 |
| 50 | 0,86 0,88 | 3,14 3,04 | 515 |
| 51 | 0,92 0,96 | 2,48 2,61 | 527 |
| 52 | 1,04 1,15 | 1,88 1,66 | 531 |
| 53 | 0,83 0,90 | 3,25 2,93 | 530 |
| 54 | 0,81 0,88 | 4,30 3,07 | 531 |
| 55 | 0,96 1,04 | 2,35 2,09 | 476 |
| 56 | 0,88 0,97 | 2,71 2,40 | 446 |
| 57 | 1,17 | 1,45 | 654 |
| 58 | 0,91 1,00 | 2,48 2,09 | 477 |
| 59 | 1,05 1,12 | 1,66 1,46 | 445 |
| 60 | 1,04 1,08 | 1,54 1,70 | 459 |
| 61 | 1,14 1,17 | 1,53 . 1,66 | 440 |
| 62 | 1,31 1,37 | 1,30 1,13 | 441 |
| 63 | 0,91 | 3,11 | 550 |
| 64 | 0,86 0,94 | 3,09 2,63 | 508 |
| 65 | 0,86 0,94 | 2,87 2,42 | 489 |
| 66 | 0,82 0,83 | 3,61 3,11 | 494 |
| 67 | 0,87 0,94 | 3,14 2,66 | 546 |
| 68 | 0,87 1,01 | 2,85 2,04 | 549 |
| 69 | 0,94 | 2,38 | 545 |
| 70 | 0,89 0,95 | 2,86 2,30 | 540 |
| 71 | 0,89 1,02 | 2,86 1,78 | 531 |
| 72 | 0,79 0,89 | 3,33 2,77 | 552 |
| 73 | 0,84 0,91 | 2,92 2,28 | 524 |
| 74 | 0,86 0,94 | 2,54 2,49 | 563 |
| 75 | 0,82 0,87 | 4,01 2,98 | 582 |
| 76 | 0,86 | 3,40 | |
| | | | |

### C) Anwendung beim Färben

10 g Polyestergewebe werden bei einer Temperatur von 50°C in 200 ml einer Färbeflotte gegeben, die X Gew.-%, bezogen auf das Polyestergewebe, Farbstoff enthält und deren pH-Wert mittels Essigsäure auf 4,5 eingestellt ist. Man behandelt 5 min bei 50°C, steigert dann die Temperatur der Flotte innerhalb von 30 min auf 130°C, Halt 60 min bei dieser Temperatur und läßt dann innerhalb von 20 min auf 60°C abkühlen.

Danach wird das ausgefärbte Polyestergewebe reduktiv gereinigt, indem man es 15 min in 200 ml einer Flotte, die 5 ml/l 32 gew.-%ige Natronlauge, 3 g/l Natriumdithionit und 1 g/l eines Anlagerungsproduktes von 48 mol Ethylenoxid an 1 mol Ricinusöl enthält, bei 65°C behandelt. Schließlich wird das Gewebe gespült, mit verdünnter Essigsäure neutralisiert, nochmals gespült und getrocknet.

Mit den Farbstoffen 1 und 20 wurden dabei folgende Ergebnisse erzielt.

| Farbstoff 1 | |
|---|---|
| Farbstoffmenge (X) | 0,26 Gew.-% |
| HGD | 358,9 |
| Chroma | 54 |
| Lichtechtheit | 6 bis 7 |

| Farbstoff 20 | |
|---|---|
| Farbstoffmenge (X) | 0,29 Gew.-% |
| HGD | 351,7 |
| Chroma | 54,9 |
| Lichtechtheit | 6 bis 7 |

## Patentansprüche

1. Azofarbstoffe der Formel I 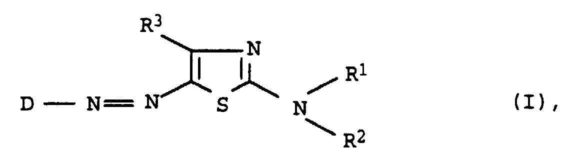 in der
R¹ und R² unabhängig voneinander jeweils für C₁-C₁₀-Alkyl, das gegebenenfalls durch Cyano, Hydroxy, Halogen, C₁-C₄-Alkanoyloxy, C₁-C₄-Alkoxycarbonyl, C₁-C₄-Alkoxycarbonyloxy oder Phenyl substituiert ist und durch 1 bis 4 Sauerstoffatome in Etherfunktion unterbrochen sein kann, C₅-C₇-Cycloalkyl, C₃-C₄-Alkenyl, gegebenenfalls durch C₁-C₄-Alkyl, C₁-C₄-Alkoxy oder Halogen substituiertes Phenyl oder R¹ und R² zusammen mit dem sie verbindenden Stickstoffatom einen 5- oder 6-gliedrigen gesättigten heterocyclischen Rest, der weitere Heteroatome enthalten kann,
R³ für tert-Butyl oder tert-Pentyl und
D für einen Rest einer Diazokomponente aus der Anilinreihe oder der Reihe der aromatischen heterocyclischen Amine stehen.

2. Azofarbstoffe nach Anspruch 1, dadurch gekennzeichnet, daß D sich von einer Diazokomponente aus der Anilinreihe oder von einem Amin aus der Pyrrol-, Thiophen-, Pyrazol-, Thiazol-, Isothiazol-, Triazol-, Thiadiazol-, Benzthiophen-, Benzthiazol-, Benzisothiazol-, Pyridothiophen-, Pyrimidothiophen- oder Thienothiophenreihe ableitet.

3. Azofarbstoffe nach Anspruch 1, dadurch gekennzeichnet, daß D für einen Rest der Formel 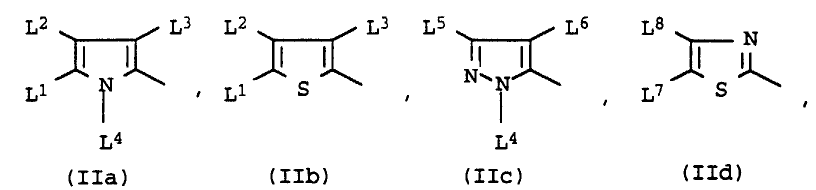 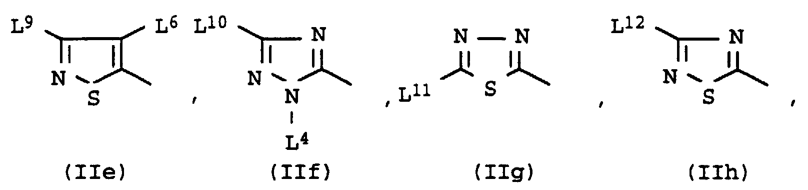 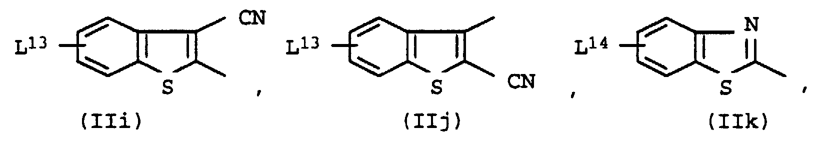 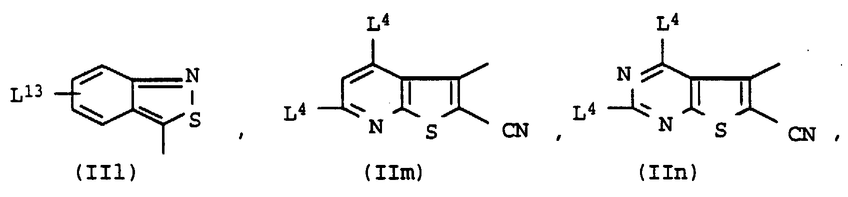 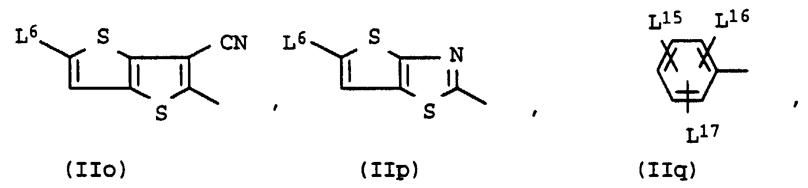 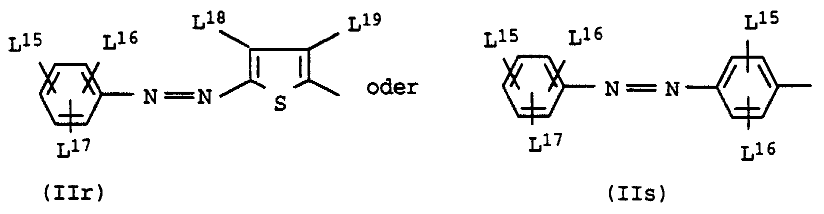 steht, worin
L¹ Nitro, Cyano, C₁-C₆-Alkanoyl, Benzoyl, C₁-C₆-Alkoxycarbonyl, C₁-C₈-Alkylsulfonyl, gegebenenfalls substituiertes Phenylsulfonyl oder einen Rest der Formel -CH=T, worin T die Bedeutung von Hydroxyimino, C₁-C₄-Alkoxyimino oder eines Restes einer CH-aciden Verbindung H₂T besitzt,
L² Wasserstoff, C₁-C₆-Alkyl, Halogen, Hydroxy, Mercapto, gegebenenfalls durch Phenyl oder C₁-C₄-Alkoxy substituiertes C₁-C₆-Alkoxy, gegebenenfalls substituiertes Phenoxy, gegebenenfalls durch Phenyl substituiertes C₁-C₈-Alkylthio, gegebenenfalls substituiertes Phenylthio, C₁-C₈-Alkylsulfonyl oder gegebenenfalls substituiertes Phenylsulfonyl,
L³ Cyano, C₁-C₆-Alkoxycarbonyl oder Nitro,
L⁴ Wasserstoff, C₁-C₆-Alkyl oder Phenyl,
L⁵ C₁-C₆-Alkyl oder Phenyl,
L⁶ Wasserstoff, Cyano, Nitro, C₁-C₆-Alkoxycarbonyl, C₁-C₆-Alkanoyl, Thiocyanato oder Halogen,
L⁷ Nitro, Cyano, C₁-C₆-Alkanoyl, Benzoyl, C₁-C₆-Alkoxycarbonyl, C₁-C₈-Alkylsulfonyl, gegebenenfalls substituiertes Phenylsulfonyl oder einen Rest der Formel -CH=T, worin T die obengenannte Bedeutung besitzt,
L⁸ Wasserstoff, C₁-C₆-Alkyl, gegebenenfalls substituiertes Phenyl, Cyano, Halogen, gegebenenfalls durch Phenyl oder C₁-C₄-Alkoxy substituiertes C₁-C₆-Alkoxy, gegebenenfalls durch Phenyl substituiertes C₁-C₈-Alkylthio, gegebenenfalls substituiertes Phenylthio, C₁-C₈-Alkylsulfonyl, gegebenenfalls substituiertes Phenylsulfonyl oder C₁-C₆-Alkoxycarbonyl,
L⁹ Cyano, gegebenenfalls durch Phenyl oder C₁-C₄-Alkoxy substituiertes C₁-C₆-Alkyl, gegebenenfalls durch Phenyl substituiertes C₁-C₈-Alkoxy, gegebenenfalls durch Phenyl substituiertes C₁-C₈-Alkylthio, gegebenenfalls substituiertes Phenyl, Thienyl, C₁-C₄-Alkylthienyl, Pyridyl oder C₁-C₄-Alkylpyridyl,
L¹⁰ Phenyl oder Pyridyl,
L¹¹ Trifluormethyl, Nitro, C₁-C₆-Alkyl, Phenyl, gegebenenfalls durch Phenyl substituiertes C₁-C₈-Alkylthio oder C₁-C₆-Dialkylamino,
L¹² gegebenenfalls durch Acetyloxy substituiertes C₁-C₆-Alkyl, Phenyl, gegebenenfalls durch Phenyl substituiertes C₁-C₈-Alkylthio, 2-Cyanoethylthio oder 2-(C₁-C₆-Alkoxycarbonyl)ethylthio,
L¹³ Wasserstoff, Nitro oder Halogen,
L¹⁴ Wasserstoff, Cyano, C₁-C₆-Alkoxycarbonyl, Nitro oder Halogen,
L¹⁵, L¹⁶ und L¹⁷ unabhängig voneinander jeweils Wasserstoff, C₁-C₆-Alkyl, C₁-C₆-Alkoxy, Halogen, Nitro, Cyano, gegebenenfalls durch Phenoxy substituiertes C₁-C₆-Alkoxycarbonyl, C₁-C₈-Alkylsulfonyl oder gegebenenfalls substituiertes Phenylsulfonyl oder L¹⁵ und L¹⁶ zusammen einen Rest der Formel CO-NW-CO, worin W die Bedeutung von C₁-C₁₀-Alkyl, besitzt, das durch 1 oder 2 Sauerstoffatome in Etherfunktion unterbrochen sein kann und gegebenenfalls durch Hydroxy substituiert ist,
L¹⁸ Wasserstoff, Methyl oder Chlor und
L¹⁹ Cyano oder C₁-C₆-Alkoxycarbonyl bedeuten.

4. Azofarbstoffe nach den Ansprüchen 1 bis 3, dadurch gekennzeichnet, daß R¹ und R² unabhängig voneinander jeweils für C₁-C₈-Alkyl, das gegebenenfalls durch C₁-C₄-Alkoxy, C₁-C₄-Alkoxycarbonyl oder Phenyl substituiert ist, Cyclopentyl, Cyclohexyl oder Prop-1-en-3-yl stehen.

5. Azofarbstoffe nach den Ansprüchen 1 bis 3, dadurch gekennzeichnet, daß D für einen Rest der Formel IIb, IId, IIe, IIh oder IIq steht.

6. Azofarbstoffe nach Anspruch 1, dadurch gekennzeichnet, daß R¹ und R² unabhängig voneinander jeweils für C₁-C₆-Alkyl, das gegebenenfalls durch Phenyl substituiert ist, stehen.

7. Azofarbstoffe nach Anspruch 1, dadurch gekennzeichnet, daß R³ tert-Butyl bedeutet.

8. Azofarbstoffe nach den Ansprüchen 1 bis 3, dadurch gekennzeichnet, daß D für einen Rest der Formel IIb, IId, IIe, IIh oder IIq steht, worin
L¹ Nitro, Cyano, Formyl oder einen Rest der Formel -CH=T, worin T die Bedeutung eines Rests einer CH-aciden Verbindung H₂T besitzt,
L² C₁-C₆-Alkyl oder Halogen,
L³ Cyano, C₁-C₆-Alkoxycarbonyl oder Nitro,
L⁶ Cyano,
L⁷ Nitro, Cyano, Formyl, C₁-C₆-Alkoxycarbonyl oder einen Rest der Formel -CH=T, worin T die obengenannte Bedeutung besitzt,
L⁸ C₁-C₆-Alkyl, gegebenenfalls substituiertes Phenyl, Cyano, Halogen oder C₁-C₆-Alkoxycarbonyl,
L⁹ gegebenenfalls durch Phenyl substituiertes C₁-C₆-Alkyl, gegebenenfalls durch Phenyl substituiertes C₁-C₆-Alkylthio oder gegebenenfalls substituiertes Phenyl,
L¹² gegebenenfalls durch Phenyl substituiertes C₁-C₈-Alkylthio und
L¹⁵, L¹⁶, L¹⁷ unabhängig voneinander jeweils Wasserstoff, C₁-C₆-Alkyl, C₁-C₆-Alkoxy, Nitro, Cyano oder gegebenenfalls durch Phenoxy substituiertes C₁-C6-Alkoxycarbonyl oder L¹⁵ und L¹⁶ zusammen einen Rest der Formel CO-NW-CO, worin W die in Anspruch 3 genannte Bedeutung besitzt, bedeuten.

9. Verfahren zur Übertragung von Farbstoffen von einem Träger auf ein mit Kunststoff beschichtetes Papier durch Diffusion oder Sublimation mit Hilfe einer Energiequelle, dadurch gekennzeichnet, daß man einen Träger verwendet, auf dem sich ein oder mehrere Azofarbstoffe gemäß Anspruch 1 befinden.

10. Verwendung der Azofarbstoffe gemäß Anspruch 1 zum Färben oder Bedrucken von synthetischen Materialien.

## Claims

1. Azo dyes of the formula I 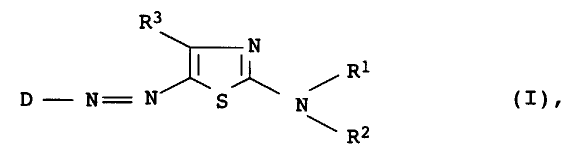 where
R¹ and R² are independently of each other C₁-C₁₀-alkyl with or without substitution by cyano, hydroxyl, halogen, C₁-C₄-alkanoyloxy, C₁-C₄-alkoxycarbonyl, C₁-C₄-alkoxycarbonyloxy or phenyl and with or without interruption by from 1 to 4 oxygen atoms in ether function, C₅-C₇-cycloalkyl, C₃-C₄-alkenyl, unsubstituted or C₁-C₄-alkyl-, C₁-C₄-alkoxy- or halogen-substituted phenyl, or R¹ and R² are together with the nitrogen atom joining them together a 5- or 6-membered saturated heterocyclic radical with or without further hetero atoms,
R³ is tert-butyl or tert-pentyl, and
D is a radical of a diazo component from the aniline series or from the aromatic heterocyclic amine series.

2. Azo dyes as claimed in claim 1 wherein D is derived from a diazo component from the aniline series or from an amine from the pyrrole, thiophene, pyrazole, thiazole, isothiazole, triazole, thiadiazole, benzothiophene, benzothiazole, benzisothiazole, pyridothiophene, pyrimidothiophene or thienothiophene series.

3. Azo dyes as claimed in claim 1 wherein D is a radical of the formula 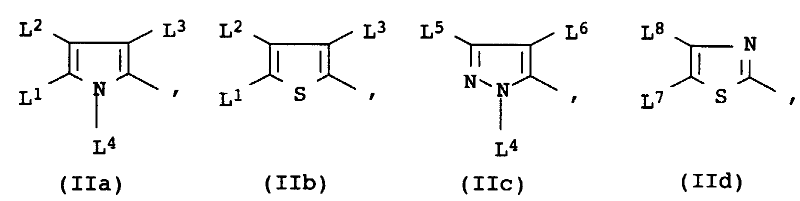 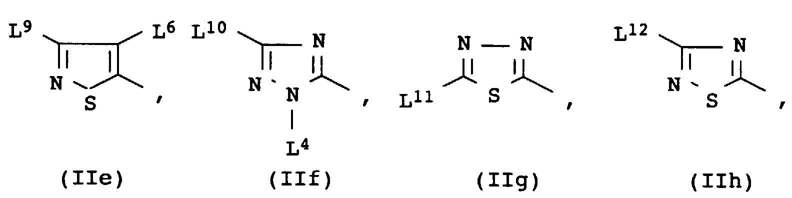 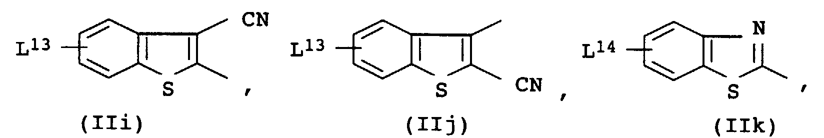 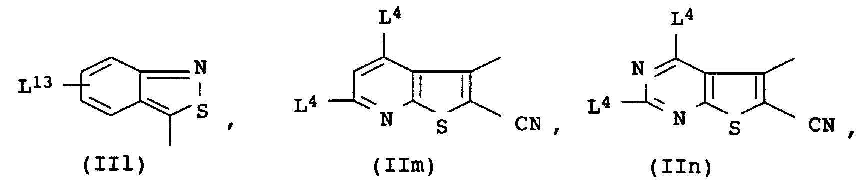 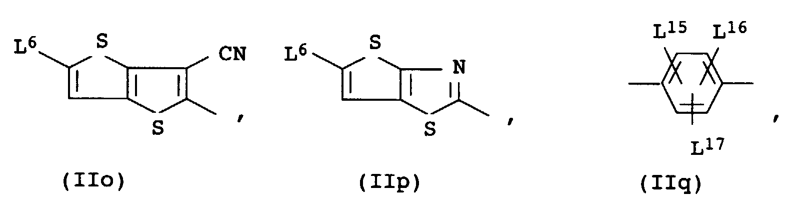 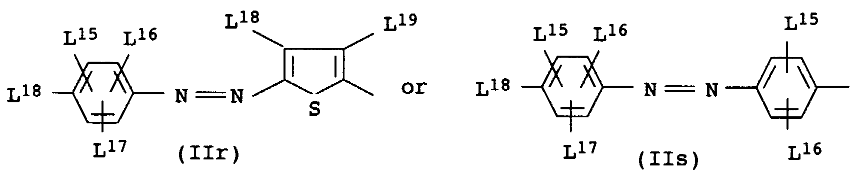 where
L¹ is nitro, cyano, C₁-C₆-alkanoyl, benzoyl, C₁-C₆-alkoxycarbonyl, C₁-C₈-alkylsulfonyl, substituted or unsubstituted phenylsulfonyl or a radical of the formula -CHIT, where T is hydroxyimino, C₁-C₄-alkoxyimino or a radical of a CH-acidic compound H₂T,
L² is hydrogen, C₁-C₆-alkyl, halogen, hydroxyl, mercapto, unsubstituted or phenyl- or C₁-C₄-alkoxy-substituted C₁-C₆-alkoxy, substituted or unsubstituted phenoxy, unsubstituted or phenyl-substituted C₁-C₈-alkylthio, substituted or unsubstituted phenylthio, C₁-C₈-alkylsulfonyl or substituted or unsubstituted phenylsulfonyl,
L³ is cyano, C₁-C₆-alkoxycarbonyl or nitro,
L⁴ is hydrogen, C₁-C₆-alkyl or phenyl,
L⁵ is C₁-C₆-alkyl or phenyl,
L⁶ is hydrogen, cyano, nitro, C₁-C₆-alkoxycarbonyl, C₁-C₆-alkanoyl, thiocyanato or halogen,
L⁷ is nitro, cyano, C₁-C₆-alkanoyl, benzoyl, C₁-C₆-alkoxycarbonyl, C₁-C₈-alkylsulfonyl, substituted or unsubstituted phenylsulfonyl or a radical of the formula -CH=T, where T is as defined above,
L⁸ is hydrogen, C₁-C₆-alkyl, substituted or unsubstituted phenyl, cyano, halogen, unsubstituted or phenyl- or C₁-C₄-alkoxy-substituted C₁-C₆-alkoxy, unsubstituted or phenyl-substituted C₁-C₈-alkylthio, substituted or unsubstituted phenylthio, C₁-C₈-alkylsulfonyl, substituted or unsubstituted phenylsulfonyl or C₁-C₆-alkoxycarbonyl,
L⁹ is cyano, unsubstituted or phenyl- or C₁-C₄-alkoxy substituted C₁-C₆-alkyl, unsubstituted or phenyl-substituted C₁-C₈-alkoxy, unsubstituted or phenyl-substituted C₁-C₈-alkylthio, substituted or unsubstituted phenyl, thienyl, C₁-C₄-alkylthienyl, pyridyl or C₁-C₄-alkylpyridyl,
L¹⁰ is phenyl or pyridyl,
L¹¹ is trifluoromethyl, nitro, C₁-C₆-alkyl, phenyl, unsubstituted or phenyl-substituted C₁-C₈-alkylthio or C₁-C₆-dialkylamino,
L¹² is unsubstituted or acetyloxy-substituted C₁-C₆-alkyl, phenyl, unsubstituted or phenyl-substituted C₁-C₈-alkylthio, 2-cyanoethylthio or 2-(C₁-C₆-alkoxycarbonyl)ethylthio,
L¹³ is hydrogen, nitro or halogen,
L¹⁴ is hydrogen, cyano, C₁-C₆-alkoxycarbonyl, nitro or halogen,
L¹⁵, L¹⁶ and L¹⁷ are independently of each other hydrogen, C₁-C₆-alkyl, C₁-C₆-alkoxy, halogen, nitro, cyano, unsubstituted or phenoxy-substituted C₁-C₆-alkoxycarbonyl, C₁-C₈-alkylsulfonyl or substituted or unsubstituted phenylsulfonyl, or L¹⁵ and L¹⁶ are together a radical of the formula CO-NW-CO where W is C₁-C₁₀-alkyl with or without interruption by 1 or 2 oxygen atoms in ether function and with or without substitution by hydroxyl,
L¹⁸ is hydrogen, methyl or chlorine, and
L¹⁹ is cyano or C₁-C₆-alkoxycarbonyl.

4. Azo dyes as claimed in any of claims 1 to 3 wherein R¹ and R² are independently of each other C₁-C₈-alkyl which may be C₁-C₄-alkoxy-, C₁-C₄-alkoxycarbonyl- or phenyl-substituted, cyclopentyl, cyclohexyl or prop-1-en-3-yl.

5. Azo dyes as claimed in any of claims 1 to 3 wherein D is a radical of the formula IIb, IId, IIe, IIh or IIq.

6. Azo dyes as claimed in claim 1 wherein R¹ and R² are independently of each other C₁-C₆-alkyl with or without substitution by phenyl.

7. Azo dyes as claimed in claim 1 wherein R³ is tert-butyl.

8. Azo dyes as claimed in any of claims 1 to 3 wherein D is a radical of the formula IIb, IId, IIe, IIh or IIq where
L¹ is nitro, cyano, formyl or a radical of the formula -CH=T where T is a radical of an acidic-CH compound H₂T,
L² is C₁-C₆-alkyl or halogen,
L³ is cyano, C₁-C₆-alkoxycarbonyl or nitro,
L⁶ is cyano,
L⁷ is nitro, cyano, formyl, C₁-C₆-alkoxycarbonyl or a radical of the formula -CH=T where T is as defined above,
L⁸ is C₁-C₆-alkyl, substituted or unsubstituted phenyl, cyano, halogen or C₁-C₆-alkoxycarbonyl,
L⁹ is unsubstituted or phenyl-substituted C₁-C₆-alkyl, unsubstituted or phenyl-substituted C₁-C₆-alkylthio or substituted or unsubstituted phenyl,
L¹² is unsubstituted or phenyl-substituted C₁-C₈-alkylthio, and
L¹⁵, L¹⁶ and L¹⁷ are independently of one another hydrogen, C₁-C₆-alkyl, C₁-C₆-alkoxy, nitro, cyano or unsubstituted or phenoxy-substituted C₁-C₆-alkoxycarbonyl, or L¹⁵ and L¹⁶ are together a radical of the formula CO-NW-CO where W is as defined in claim 3.

9. A process for transferring dyes from a transfer to plastic-coated paper by diffusion or sublimation by means of an energy source, which comprises using a transfer on which there is or are one or more azo dyes as claimed in claim 1.

10. The use of the azo dyes of claim 1 for dyeing or printing synthetic materials.

## Revendications

1. Colorants azoïques de formule I 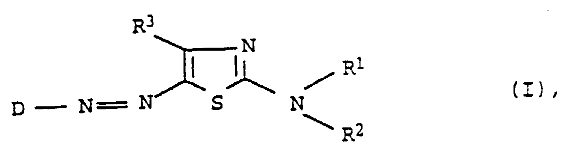 dans laquelle
R¹ et R² représentent chacun indépendamment l'un de l'autre, un groupement alkyle en C₁-C₁₀, éventuellement substitué par des groupements cyano, hydroxy, des atomes d'halogène, des groupements alcanoyloxy en C₁-C₄, alcoxycarbonyle en C₁-C₄, alcoxycarbonyloxy en C₁-C₄ ou phényle et pouvant être interrompu par 1 à 4 atomes d'oxygène en fonction éther, un groupement cycloalkyle en C₅-C₇, un groupement alcényle en C₃-C₄, un groupement phényle éventuellement substitué par des groupements alkyle en C₁-C₄, alcoxy en C₁-C₄ ou par des atomes d'halogène, ou bien R¹ et R² représentent ensemble, avec l'atome d'azote qui les relie, un reste hétérocyclique saturé à 5 ou 6 chaînons, pouvant contenir d'autres hétéroatomes,
R³ représente un groupement tert.-butyle ou tert.-pentyle et
D représente un reste d'un composant diazoïque de la série de l'aniline ou de la série des amines hétérocycliques aromatiques.

2. Colorants azoïques selon la revendication 1, caractérisés en ce que D dérive d'un composant diazoïque de la série de l'aniline ou d'une amine de la série du pyrrole, du thiophène, du pyrazole, du thiazole, de l'isothiazole, du triazole, du thiadiazole, du benzothiophène, du benzothiazole, du benzisothiazole, du pyridothiophène, du pyrimidothiophène ou du thiénothiophène.

3. Colorants azoïques selon la revendication 1, caractérisés en ce que D représente un reste de formule 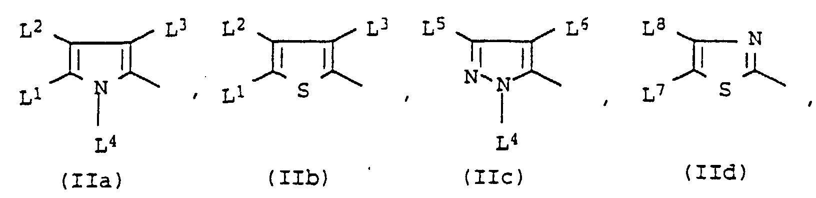 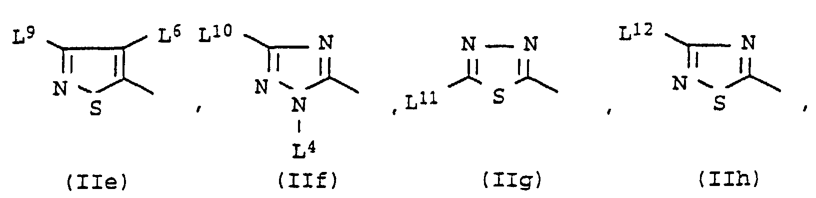 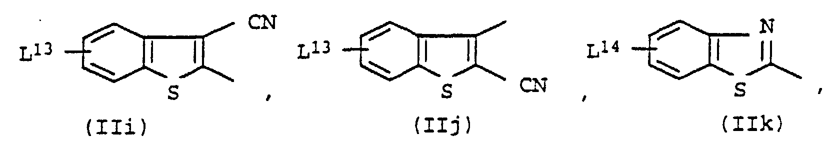 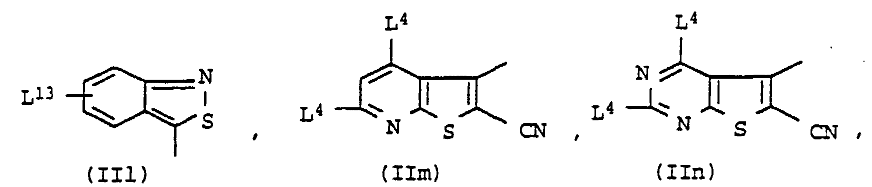 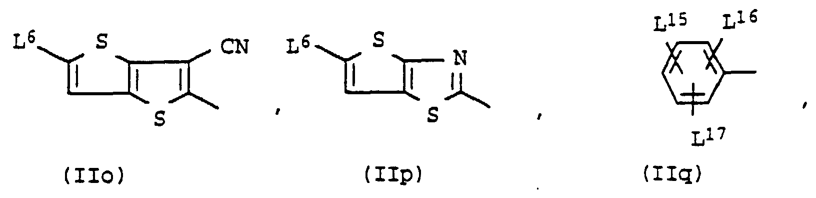 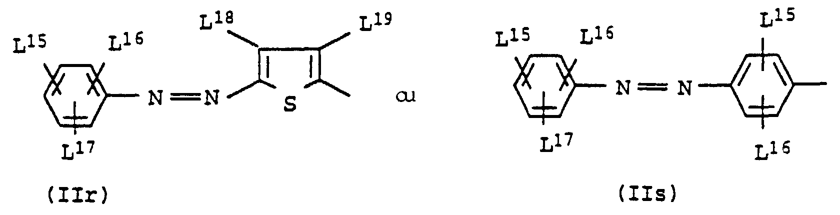 où
L¹ représente un groupement nitro, cyano, alcanoyle en C₁-C₆, benzoyle, (alcoxy en C₁-C₆)carbonyle, (alkyle en C₁-C₈)sulfonyle, un groupement phénylsulfonyle éventuellement substitué, ou un reste de formule -CH=T, où T représente un groupement hydroxyimino, (alcoxy en C₁-C₄)imino ou un reste d'un composé H₂T à CH acide,
L² représente un atome d'hydrogène, un groupement alkyle en C₁-C₆, un atome d'halogène, un groupement hydroxy, mercapto, un groupement alcoxy en C₁-C₆ éventuellement substitué par des groupements phényle ou alcoxy en C₁-C₄, un groupement phénoxy éventuellement substitué, un groupement (alkyle en C₁-C₈)thio éventuellement substitué par des groupements phényle, un groupement phénylthio éventuellement substitué, un groupement (alkyle en C₁-C₈)sulfonyle ou phénylsulfonyle éventuellement substitué,
L³ représente un groupement cyano, (alcoxy en C₁-C₆)carbonyle ou nitro,
L⁴ représente un atome d'hydrogène, un groupement alkyle en C₁-C₆ ou phényle,
L⁵ représente un groupement alkyle en C₁-C₆ ou phényle,
L⁶ représente un atome d'hydrogène, un groupement cyano, nitro, (alcoxy en C₁-C₆)carbonyle, alcanoyle en C₁-C₆, thiocyanato ou un atome d'halogène,
L⁷ représente un groupement nitro, cyano, alcanoyle en C₁-C₆, benzoyle, (alcoxy en C₁-C₆)carbonyle, (alkyle en C₁-C₈)sulfonyle, un groupement phénylsulfonyle éventuellement substitué ou un reste de formule -CH=T, où T prend la signification susmentionnée,
L⁸ représente un atome d'hydrogène, un groupement alkyle en C₁-C₆, un groupement phényle éventuellement substitué, un groupement cyano, un atome d'halogène, un groupement alcoxy en C₁-C₆ éventuellement substitué par des groupements phényle ou alcoxy en C₁-C₄, un groupement (alkyle en C₁-C₈)thio éventuellement substitué par des groupements phényle, un groupement phénylthio éventuellement substitué, un groupement (alkyle en C₁-C₈)sulfonyle, un groupement (alcoxy en C₁-C₆)carbonyle ou un groupement phénylsulfonyle éventuellement substitué,
L⁹ représente un groupement cyano, un groupement alkyle en C₁-C₆ éventuellement substitué par des groupements phényle ou alcoxy en C₁-C₄, un groupement alcoxy en C₁-C₈ éventuellement substitué par des groupements phényle, un groupement (alkyle en C₁-C₈)thio éventuellement substitué par des groupements phényle, un groupement phényle éventuellement substitué, un groupement thiényle, un groupement (alkyle en C₁-C₄)thiényle, un groupement pyridyle ou (alkyle en C₁-C₄)pyridyle,
L¹⁰ représente un groupement phényle ou pyridyle,
L¹¹ représente un groupement trifluorométhyle, nitro, alkyle en C₁-C₆, phényle, un groupement di(alkyle en C₁-C₆)amino ou un groupement (alkyle en C₁-C₈)thio éventuellement substitué par des groupements phényle,
L¹² représente un groupement alkyle en C₁-C₆ éventuellement substitué par des groupements acétyloxy, un groupement phényle, un groupement (alkyle en C₁-C₈)thio éventuellement substitué par des groupements phényle, un groupement 2-cyanoéthylthio ou 2-((alcoxy en C₁-C₆)carbonyle)éthylthio,
L¹³ représente un atome d'hydrogène, un groupement nitro ou un atome d'halogène,
L¹⁴ représente un atome d'hydrogène, un groupement cyano, un groupement (alcoxy en C₁-C₆)carbonyle, un groupement nitro ou un atome d'halogène,
L¹⁵, L¹⁶ et L¹⁷ représentent chacun indépendamment les uns des autres, un atome d'hydrogène, un groupement alkyle en C₁-C₆, un groupement alcoxy en C₁-C₆, un atome d'halogène, un groupement nitro, cyano, un groupement (alcoxy en C₁-C₆)carbonyle éventuellement substitué par des groupements phénoxy, un groupement (alkyle en C₁-C₈)sulfonyle ou un groupement phénylsulfonyle éventuellement substitué, ou bien L¹⁵ et L¹⁶ représentent ensemble un reste de formule CO-NW-CO, où W représente un groupement alkyle en C₁-C₁₀ pouvant être interrompu par 1 ou 2 atomes d'oxygène en fonction éther et éventuellement substitué par des groupements hydroxy,
L¹⁸ représente un atome d'hydrogène, un groupement méthyle ou un atome de chlore et
L¹⁹ représente un groupement cyano ou (alcoxy en C₁-C₆)carbonyle.

4. Colorants azoïques selon l'une quelconque des revendications 1 à 3, caractérisés en ce que R¹ et R² représentent chacun indépendamment l'un de l'autre, un groupement alkyle en C₁-C₈, pouvant être substitué par des groupements alcoxy en C₁-C₄, (alcoxy en C₁-C₄)carbonyle ou phényle, un groupement cyclopentyle, cyclohexyle ou prop-1-én-3-yle.

5. Colorants azoïques selon l'une quelconque des revendications 1 à 3, caractérisés en ce que D représente un reste de formule IIb, IId, IIe, IIh ou IIq.

6. Colorants azoïques selon la revendication 1, caractérisés en ce que R¹ et R² représentent chacun indépendamment l'un de l'autre, un groupement alkyle en C₁-C₆ éventuellement substitué par des groupements phényle.

7. Colorants azoïques selon la revendication 1, caractérisés en ce que R³ représente un groupement tert.-butyle.

8. Colorants azoïques selon l'une quelconque des revendications 1 à 3, caractérisés en ce que D est mis pour un reste de formule IIb, IId, IIe, IIh ou IIq, où
L¹ représente un groupement nitro, cyano, formyle ou un reste de formule -CH=T, où T représente un reste d'un composé H₂T à CH acide,
L² représente un groupement alkyle en C₁-C₆ ou un atome d'halogène,
L³ représente un groupement cyano, (alcoxy en C₁-C₆)carbonyle ou nitro,
L⁶ représente un groupement cyano,
L⁷ représente un groupement nitro, cyano, formyle, (alcoxy en C₁-C₆)carbonyle ou un reste de formule -CH=T, où T prend la signification susmentionnée,
L⁸ représente un groupement alkyle en C₁-C₆, un groupement phényle éventuellement substitué, un groupement cyano, un atome d'halogène ou un groupement (alcoxy en C₁-C₆)carbonyle,
L⁹ représente un groupement alkyle en C₁-C₆ éventuellement substitué par des groupements phényle, un groupement (alkyle en C₁-C₆)thio éventuellement substitué par des groupements phényle ou un groupement phényle éventuellement substitué,
L¹² représente un groupement (alkyle en C₁-C₈)thio éventuellement substitué par des groupements phényle,
L¹⁵, L¹⁶, L¹⁷ représentent chacun indépendamment l'un de l'autre, un atome d'hydrogène, un groupement alkyle en C₁-C₆, un groupement alcoxy en C₁-C₆, nitro, cyano ou (alcoxy en C₁-C₆)carbonyle éventuellement substitué par des groupements phénoxy, ou bien L¹⁵ et L¹⁶ représentent ensemble un reste de formule CO-NW-CO, où W prend la signification mentionnée dans la revendication 3.

9. Procédé de transfert de colorants d'un support sur un papier revêtu de matière plastique, par diffusion ou sublimation, à l'aide d'une source d'énergie, caractérisé en ce que l'on utilise un support sur lequel se trouvent un ou plusieurs colorants azoïques selon la revendication 1.

10. Utilisation de colorants azoïques selon la revendication 1 pour la teinture ou l'impression de matériaux synthétiques.
